# EUROPÄISCHE PATENTSCHRIFT

(11) **EP 2 713 466 B1**
(45) Veröffentlichungstag und Bekanntmachung des Hinweises auf die Patenterteilung: **20.07.2016**
(21) Anmeldenummer: 12186488.8
(22) Anmeldetag: 28.09.2012
(51) Int. Cl.: H02J 3/30

(54) **Mobiles Energiespeichermodul**
Mobile energy storage module
Module de stockage d'énergie mobile

(43) Veröffentlichungstag der Anmeldung: 02.04.2014
(73) Patentinhaber: Enrichment Technology Company Ltd., 52409 Jülich (DE)
(72) Erfinder: Treppmann, Christoph, 52074 Aachen (DE); vor dem Esche, Rainer, 52525 Heinsberg (DE); Bäumer, Thomas, 41836 Hückelhoven (DE); Sonnen, Michael, 47259 Duisburg (DE); Schäfer, Christoph, 52072 Aachen (DE); Middendorf, Christian, 52072 Aachen (DE)
(74) Vertreter: Raasch, Detlef

(56) Entgegenhaltungen:
- EP-A1- 2 495 800
- WO-A1-03/049249
- DE-A1- 2 918 834
- DE-A1- 4 211 891
- US-A1- 2004 263 116
- US-A1- 2006 012 320
- US-A1- 2011 298 293
- US-B2- 8 008 804
- FLYNN M M ET AL: "Saving energy using flywheels", IEEE INDUSTRY APPLICATIONS MAGAZINE, IEEE SERVICE CENTER, PISCATAWAY, NJ, US, Bd. 14, Nr. 6, 1. November 2008 (2008-11-01), Seiten 69-76, XP011234318, ISSN: 1077-2618, DOI: 10.1109/MIAS.2008.929351

## Beschreibung

### Gebiet der Erfindung

Die Erfindung betrifft ein mobiles Energiespeichermodul mit hoher Energiespeicherkapazität und Leistung, eine Energiespeicheranlage mit solchen Energiespeichermodulen und ein Verfahren zum variablen Bereitstellen von Energie für Regel- und Systemaufgaben in den Stromnetzen.

### Hintergrund der Erfindung

Übertragungsnetze und deren Zusammenschluss in länderübergreifende Verbundnetze sichern zurzeit die flächendeckende Stromversorgung. Mit wachsender Volatilität des Stromnetzes wächst der Bedarf an dezentralen Energiespeicheranlagen zur Lösung lokaler Aufgaben im Stromnetz, beispielsweise die lokale Nutzung lokal erzeugter Energie oder die Verbesserung von lokalen Stromlieferungen aus erneuerbaren Energien entlang einer zeitlichen Vorhersage. Gerade die dezentrale Energieerzeugung wie durch eine Vielzahl an flächenmäßig verteilten Windenergie- oder Solarenergieanlagen führt immer öfter zu schwer beherrschbaren Spannungsverschiebungen in den Stromnetzen. Da nicht alle Stromnetze eine ausreichende Transportkapazität besitzen, können zeitweise lokale und zeitlich begrenzte hohe Stromüberschüsse oder Strombedarfe vom Stromnetz nicht mehr transportiert werden. Es wäre daher wünschenswert, zur Verbesserung der Stromqualität und der Versorgungssicherheit und zur Gewährleistung der Transportierbarkeit des Stroms in den bestehenden Stromnetzen dezentrale Energiespeicher flexibel in die Stromnetze je nach Bedarf integrieren zu können.

Aufgrund des Ausbaus des Stromnetzes können Transportengpässe für den Stromtransport langfristig behoben werden. Allerdings ist ein flächendeckender Ausbau kostenintensiv und benötigt eine lange Genehmigungs- und Bauphase. Für eine Unterstützung der gleichmäßigen Stromverteilung werden aber Speicherlösungen benötigt, die an beliebigen Standorten sofort variabel einsetzbar sind, gegebenenfalls bei Bedarf schnell an andere Standorte versetzt werden können und dennoch über eine für die Netzstabilisierung ausreichend hohe Energiespeicherkapazität und Leistung verfügen.

Pumpspeicherwerke sind Energiespeicher, die zwar von ihrer Kapazität her große Mengen an Energie speichern können und als Minutenreserve für die Stromnetze zur Verfügung stehen, allerdings sind sie geographisch an ihren Standort gebunden und können nicht überall errichtet und nicht auf Bedarf hin verlagert werden. Daher lösen diese Energiespeicher nicht das Stromverteilungsproblem, da die Energie der Pumpspeicherwerke gegebenenfalls auch über sehr weite Strecken und über Stromleitungen mit möglicherweise zu geringer Kapazität transportiert werden muss. Außerdem ist der Aufbau eines Pumpspeicherwerks aufwändig, langwierig und kostenintensiv. Pumpspeicherwerke sind zudem für einen Volllastbetrieb ausgelegt und sind daher für eine Verbesserung der Netzqualität in kleinen lokalen Stromnetzen nicht geeignet.

Batteriespeicher stellen einen Energiespeichertyp dar, der zum Teil schnell an andere Orte verlegt und damit variabel eingesetzt werden kann. Batteriespeicher sind aber nicht für einen lastwechselfesten Betrieb geeignet und degradieren schnell aufgrund von Temperatureinflüssen, Systemausfällen und Fehlbedienung. Außerdem sind Batteriespeicher sehr wartungsintensiv. Außerdem stellen Batteriespeicher wegen eines großes Brand- und Chemierisikos eine Umwelt- und Wassergefährdung dar, die einen enormen Absicherungsaufwand erfordern. Gegenwärtige mechanische Energiespeicher mit hoher Kapazität wie Schwungradenergiespeicher werden aus mechanischen Gründen derzeit stationär aufgebaut und lösen lediglich lokale Netzprobleme. Solche Anlagen sind bisher nicht mobil und können nachträglich damit auch nicht schnell in ihrer Kapazität verändert werden.

US 8,008,804 B2 offenbart ein Verfahren zur Regelung der Wechselspannung in einem Wechselspannungs-Verteilungsnetz, wobei dazu ein Energiespeichersystem an ein Verteilungsnetz als überregionales Übertragungsnetz angeschlossen ist und ein oder mehrere Schwungradenergiespeicher umfasst. Das Energiespeichersystem wird dabei ausschließlich zur Frequenzregulierung im Verteilungsnetz mittels Energieeinspeisung oder Energieabgabe verwendet. Das Energiespeichersystem kann dabei als mobile Einheit in einem Container angeordnet sein.

US 2011/298293 A1 befasst sich mit der Lagerung von Schwungrädern mit einem Antriebsschaft verbunden mit einem zylindrische ferromagnetische Rotorabschnitt und skizziert schematisch die prinzipielle Möglichkeit, mehrere Schwungrädern in einem gemeinsamen Gehäuse anzuordnen sowie die Möglichkeit, mehrere solcher Gehäusen nebeneinander anzuordnen.

### Zusammenfassung der Erfindung

Es ist daher eine Aufgabe der Erfindung, eine an beliebigen Orten variabel und mit geringem Aufwand schnell einsetzbare Energiespeicheranlage mit ausreichend großer Energiespeicherkapazität und Leistung für Zwischenspeicher-, Regel- und Systemaufgaben in Stromnetzen bereitzustellen.

Diese Aufgabe wird gelöst durch ein mobiles Energiespeichermodul mit einem umschließenden Modulgehäuse zum Absichern des Inhalts des Modulgehäuses gegenüber Einwirkungen von außen während eines Transports oder Betriebs, wobei das Modulgehäuse mindestens eine Netzanschlussschnittstelle, mindestens eine Datenschnittstelle zum Empfangen externer Daten als Steuerbefehle und zum Aussenden von Betriebsdaten nach extern, ein Schwungradmodul mit einer Vielzahl an Schwungradspeichereinheiten, die über einen elektrischen Zwischenkreis zur Bereitstellung einer gemeinsamen Modulspeicherkapazität und Modulleistung mit der mindestens einer Netzanschlussschnittstelle verbunden sind, ein Vakuummodul zur Erzeugung eines für den Betrieb des Schwungradmoduls benötigten Mindestvakuums in den jeweiligen Schwungradspeichereinheiten und ein Modulsteuersystem für eine geeignete Steuerung der Module im Modulgehäuse umfassend das Schwungradmodul und das Vakuummodul, umfasst, wobei das Schwungradmodul einen gemeinsamen Rahmen (33) in Form eines offenen Quaders mit mehreren Rahmenteilen umfasst, der gleichzeitig die Lager der Schwungradspeichereinheiten trägt, sodass der Rahmen ein Vormontieren der Schwungradspeichereinheiten in dem Rahmen außerhalb des Modulgehäuses und ein Einsetzen des Schwungmoduls mit Rahmen nach der Vormontage als Ganzes in das Modulgehäuse ermöglicht und der so ausgestaltet ist, dass das Schwungradmodul als Ganzes auch wieder entnommen werden kann.

Das erfindungsgemäße Energiespeichermodul stellt eine an beliebigen Orten variabel und mit geringem Aufwand schnell einsetzbare Energiespeicheranlage beziehungsweise eine Komponente für eine solche Energiespeicheranlage dar, die aufgrund ihrer modularen Bauweise schnell und einfach mit anderen Energiespeichermodulen kombiniert beziehungsweise ergänzt werden kann, damit das Energiespeichermodul oder eine Kombination mehrerer solcher Energiespeichermodule als Energiespeicheranlage eine ausreichend große Energiespeicherkapazität und Leistung für Regel- und Systemaufgaben in Stromnetzen bereitstellt. Ein einzelnes Energiespeichermodul stellt dabei im Einzelfall ebenfalls eine Energiespeicheranlage dar, wodurch die Anlagenspeicherkapazität und Anlagenleistung durch die Modulspeicherkapazität und Modulleistung des Energiespeichermoduls gegeben ist. Durch die Mobilität des Energiespeichermoduls ist gleichermaßen die Mobilität einer Energiespeicheranlage aus solchen Energiespeichermodulen gegeben. Durch das transportierbar ausgestaltete Modulgehäuse erhalten die Komponenten innerhalb des

### - weiter mit der ursprünglichen Seite 4 -

Modulgehäuses eine mechanische Stabilität, die einen langlebigen Betrieb des Energiespeichermoduls und eine Verlagerbarkeit des Energiespeichermoduls an andere Aufstellorte ermöglicht. Die Modularität ermöglicht ferner eine schnelle Installation vor Ort, da alle wesentlichen Komponenten zum Betrieb des Energiespeichermoduls im Modulgehäuse angeordnet sind und lediglich über die Netzschnittstellen und Datenschnittstellen am Aufstellungsort mit den notwendigen Strom- und Datenverbindungen verbunden werden müssen. Durch die Modularität kann die zur Verfügung gestellte Kapazität über die Anzahl der Energiespeichermodule bedarfsgerecht hochskaliert werden. Die einzelnen Energiespeichermodule werden somit alleine oder innerhalb einer modular aufgebauten Energiespeicheranlage effektiv ausgelastet und können damit kostengünstig hergestellt und betrieben werden. Das Energiespeichermodul umfasst Module in einem Modulgehäuse. Diese Module bezeichnen die für den Betrieb des Energiespeichermoduls benötigten Komponenten wie bespielsweise das Schwungradmodul, das Vakuummodul und vorzugsweise gegebenenfalls auch ein Heiz- und Kühlmodul.

Für die Gewährleistung der Mobilität umschließt das Modulgehäuse alle darin installierten Module und Komponenten. Der Begriff "umschließen" bezeichnet hierbei eine allseitige Abgrenzung des Energiespeichermoduls gegenüber der Umwelt. Diese Abgrenzung kann beispielsweise durch einen Gehäuserahmen mit daran befestigten Ober-, Unter und Seitenflächen ausgestaltet sein. Für ein robustes Modulgehäuse kann dies beispielsweise zumindest mit einem überwiegenden Anteil aus Beton, Metall oder Stahl gefertigt sein, vorzugsweise ist es vollständig aus Stahl gefertigt. Das umschließende Modulgehäuse sichert den Inhalt des Modulgehäuses gegenüber Einwirkungen von außen während eines Transports oder Betriebs. Vorzugsweise sind die Module im Modulgehäuse, insbesondere das Schwungradmodul, durch Dämpfungselemente zwischen den Modulen, insbesondere dem Schwungradmodul, und dem Modulgehäuse beim Betrieb und Transport gesichert. Für eine Aufnahme der statischen und dynamischen Lasten der Schwungradspeichereinheiten im Betrieb können zumindest einige der Dämpfungselemente im Energiespeichermodul auch nach dem Transport verbleiben. Zusätzlich ist das Modulgehäuse durch sein robustes Material geeignet, statische und dynamische Lasten, die nicht von den Dämpfungselementen absorbiert werden können, aufzunehmen. Dabei ist es notwendig, dass die im ordnungsgemäßen und außerordentlichen Betrieb auftretenden mechanischen Lasten in die für den Transport installierten oder örtlichen Verankerungspunkte abgeleitet werden. Dies kann zum Beispiel durch einen geeigneten Stahlrahmen im Modulgehäuse und oder im Modul erfolgen, auf dem die einzelnen Schwungradspeichereinheiten mit oder ohne Dämpfungselemente befestigt sind. Über vordefinierte Lastübertragungspunke können die auftretenden Lasten dabei nach außen zum Beispiel in Fundamente geleitet werden. Das Modulgehäuse kann dabei jede geeigneten Abmessungen besitzen, die einen Transport des Energiespeichermoduls beispielsweise mit Lastkraftwagen, Kränen und/oder Transportschiffen ermöglichen. Das Modulgehäuse kann dabei eine Box oder ein Container mit nach außen vordefinierten Anker- oder Befestigungspunkten sein.

Eine weitere wesentliche Aufgabe des Modulgehäuses ist die Sicherstellung der notwendigen thermischen Randbedingungen. In einer Ausführungsform ist das Modulgehäuse dazu zumindest wind- und wasserdicht ausgeführt und besitzt eine Isolationsschicht, die geeignet ist, ein kontrolliertes Raumklima, beispielsweise von 10°C bis 45°C, im Modulgehäuse aufrecht zu erhalten. Idealerweise ist die Isolationsschicht aus einem winddichten Außenmaterial wie zum Beispiel Stahl, Beton oder Kunststoff aufgebaut mit dahinter oder zwischenliegendem Isolationsschaum oder Isolationswolle. In einer bevorzugten Ausführungsform ist die Isolierschicht innen am oder im Modulgehäuse angeordnet. Dadurch wird die Isolierschicht vor äußeren Einflüssen wie Wetter und Sonnenstrahlung geschützt und ihre Funktionstüchtigkeit bleibt länger erhalten. Die Bezeichnung "im Modulgehäuse" bezeichnet die Integriereung der Isolierschicht in das Modulgehäuse hinein (bespielsweise in einer Sandwichbauweise als Kernschicht), ohne dass sie dabei an einer Oberfläche des Modulgehäuses angebracht ist. Idealerweise verfügt das Modulgehäuse auch über nach außen gewandte Wärmetauscher zur kontrollierten Wärmeabgabe. Zum Wetterschutz sind sowohl das Modulgehäuse als auch die Wärmetauscher und Stromzuführungen so gestaltet, dass ein Eintritt von Wasser oder großen Luftmengen verhindert wird. Zur Erfüllung der thermischen wie mechanischen Schutzwirkung sind beispielsweise Sandwichmaterialien mit einen Schaumkern >40mm Dicke als Isolierschicht ideal, die zum einen Eigenstabilität erzeugen und zum anderen isolieren. Zur Durchleitung der mechanischen Lasten von innen nach außen kann das Sandwichmaterial örtlich durch eingebauten Metalloder Metallrohrrahmen verstärkt werden. In diese Rahmen können dann die sowohl innen liegenden System als auch die außen liegenden Befestigungspunkte verankert werden. Zur weiteren Abschirmung externer thermischer Lasten, wie zum Beispiel direkte Sonneneinstrahlung, können geeignete Elemente oder Strukturen, wie z.B. Schirme oder auch Kollektoren, vorgesehen werden.

Gemäß der vorliegenden Erfindung umfasst das Schwungradmodul einen modulinternen gemeinsamen Rahmen, an dem die Schwungradspeichereinheiten montiert und gelagert sind. Durch die Halterung in einem Rahmen wird eine robuste Fixierung der Schwungradspeichereinheiten relativ zueinander gewährleistet. Dafür geeignete Rahmen sind beispielsweise Stahlrahmen, die aus I-Trägern oder Kastenprofilen zusammengeschweißt sind. Das Trägheitsmoment und die Materialstärken des Rahmens sind dabei so gewählt, dass durch gewöhnliche und außergewöhnliche Betriebslasten entstehende Kräfte zu einer nicht zu großen Verformung des Rahmens führen. Hierzu kann es auch notwendig sein Schubversteifungen in den Rahmen zu integrieren. Idealerweise ist der Rahmen so gestaltet, das er zum Modulgehäuse hin die Kraft gezielt übertragen kann , damit das Gehäuse die Kräfte in das Gehäusefundament übertragen kann.

Der Rahmen ist so ausgestaltet, dass das Schwungradmodul als Ganzes in das Modulgehäuse eingesetzt und wieder entnommen werden kann. Dadurch können die Schwungradspeichereinheiten außerhalb des Modulgehäuses auf dem Schwungradmodul vormontiert werden, was eine schnelle Montage der Schwungradspeichereinheiten in den Rahmen aufgrund des gegenüber dem Modulgehäuse wesentlich größeren Montagevolumens ermöglicht. Zusätzlich können schadhafte Schwungradspeichereinheiten schnell ausgetauscht werden, indem der Rahmen zum Austausch aus dem Modulgehäuse entfernt wird und nach dem erfolgten Austausch der schadhaften Schwungradspeichereinheit wieder in das Modulgehäuse eingesetzt wird. Unterstützt werden kann der Ansatz einer wartungsfreundlichen Gesamtkonstruktion beispielsweise auch dadurch, dass die geometrische Anordnung der Schwungradspeichereinheit einen Servicekorridor im Schwungradmodul vorsieht, über den jede Modulkomponente erreichbar ist und einzelne Schwungradmodul oder Systemkomponenten herausgeholt und getauscht werden können.

Die Schwungspeichereinheiten sind so am Rahmen des Schwungradmoduls montiert, dass die mechanische Energie einer einzelnen Schwungradspeichereinheit im Falle eines außerplanmäßigen Versagens durch im Rahmen befindliche Strukturbauteile so abgeleitet werden kann, dass benachbarte Schwungradspeichereinheiten im Betrieb nicht beeinflusst werden.

In einer weiteren Ausführungsform ist das Modulgehäuse ein genormter Container, vorzugsweise ein ISO-Container. Genormte Container sind bezüglich ihrer Abmessungen standardisierter Container, für den geeignete Transporteinrichtungen für einen schnellen Transport zu einem anderen Aufstellort verfügbar sind, beispielsweise geeignete Lastkraftwagen, Bahnwaggons, oder Ladeplätze auf Transportschiffen und entsprechende Umschlagplätze bei einem notwendigen Wechsel des Transportmittels. ISO-Container sind nach ISO 668 genormte Großraumbehälter, mit denen das Verladen, Befördern, Lagern und Entladen von Gütern, hier ein Energiespeichermodul, vereinfacht und beschleunigt wird. Die am weitesten verbreiteten ISO-Container haben eine Breite von 8 Fuß und sind entweder 20 Fuß oder 40 Fuß lang. Üblich sind Höhen, welche beim Straßentransport ohne Beschränkungen gefahren werden können. ISO-Container besitzen je nach Abmaßen ein Innenvolumen von 33 m³ bis 86 m³ und eine maximale Zuladung von 21 t bis 27 t. Technisch ist es günstig, das Modul im Gewicht so zu gestalten, das ein für den Transport günstiges Gewicht, erreicht wird, wobei das Modul nicht zu leicht sein sollte, um außerordentlichen Belastungen besser widerstehen zu können. Im Gegensatz zum erfindungsgemäßen Energespeichermodul sind Schwungradspeichereinheiten mit größeren Kapazitäten gemäß dem Stand der Technik unlösbar in oder mit dem Untergrund des Aufstellortes verbunden, beispielsweise eingelassen in ein Betonfundament im Boden. Solche Einheiten sind ortsfest installiert und können ohne Demontage der gesamten Anlageneinheit nicht entfernt werden. Sie sind somit nicht mobil.

In einer weiteren Ausführungsform umfasst das Modulgehäuse an der Unterseite oder an eine oder mehrere Seitenflächen Bodenfixiermittel zur sicheren, vorzugsweise nicht destruktiv-reversiblen, Verankerung des Energiespeichermoduls am Boden. Dadurch kann eine feste und schnelle Verankerung des Energiespeichermoduls für einen standsicheren Betrieb erreicht werden. Diese Bodenfixiermittel können beispielsweise Ösen oder Ringe zum Befestigen von Seilen oder Haken oder Bodenanker zum direkten Einbringen in das Bodenfundament sein. Mit Ringen oder Ösen kann das Modulgehäuse schnell auf entsprechende Bodenplatte, beispielsweise auf Betonplatten, befestigt werden. Bodenanker ermöglichen das temporär ortsfeste und standsichere Aufstellen der Energiespeichermoduls auch auf einem normalen mit Streifenfundamenten verstärktem Erdboden. Dieser Erdboden kann dafür beispielsweise vorher geglättet und verdichtet worden sein. Durch die Art der aufgeführten Bodenbefestigungsmittel wird neben dem sicheren und fixierten Stand des Energiespeichermoduls gleichzeitig eine schnelle und einfache Entfernung des Energiespeichermoduls für einen eventuellen Transport an einem anderen Aufstellort bei fehlendem Bedarf an Modulspeicherkapazität und Modulleistung an den bestehenden Aufstellort ermöglicht. Da im Modul hohe Energiemengen gespeichert werden, ist das Modulgehäuse auch gleichzeitig als technischer und personenbezogener Anlagenschutz ausgestattet. Auch hierbei hilft die robuste Bauweise des Moduls aus Beton oder Metallsandwich mit integrierten Rahmenelementen, die einen gewaltsamen Zutritt erschweren. Bei einer Aufstellung in der Öffentlichkeit ist zusätzlich ein Impact-Schutz notwendig der durch robuste Stahl- oder Betonrahmen, verstärkten Ecken und ausreichende Flächenträgheitsmomente der Wände sowie geeignete Wandmaterialien erreicht wird. In einer Ausführungsform ist das Modulgehäuse so gestaltet, dass Impact- und andere äußere Lasten so verarbeitet werden können, dass eine Aufstellung in der Öffentlichkeit möglich ist, ohne die Betriebssicherheit zu gefährden.

Dabei kann das Modul auch optischen Ansprüchen genügen. Aufgrund der geforderten Mobilität sind auch Aufstellungen in mitten von öffentlichen Orten erwünscht. In diesem Zusammenhang kann das Modul Beispielweise auch als Werbe- oder Kommunikationsfläche verwendet werden.

Das Modulsteuersystem und die vorhandenen Netzanschlussschnittstellen ermöglichen es, dass das Energiespeichermodul (oder die daraus gebildete Energiespeicheranlage) unterschiedliche Speicher-, Regel- und Systemaufgaben in gegebenenfalls separat angeschlossenen lokalen und nicht lokalen Stromnetzen ausführen kann und damit eine gleichzeitige Verbesserung von lokaler Netzqualität in den lokalen Stromnetzen und Versorgungssicherheit in nicht lokalen Stromnetzen bewirken kann. Hierbei kann das Energiespeichermodul entweder direkt mit einem nicht lokalen Stromnetz und einem oder mehreren lokalen Stromnetzen verbunden sein oder über ein angeschlossenes lokales Stromnetz indirekt mit einem nicht lokalen Stromnetz verbunden sein, sofern das lokale Stromnetz selber mit dem nicht lokalen Stromnetz verbunden ist. Dies gilt insbesondere, wenn das Energiespeichermodul separat ohne weitere zusätzliche Energiespeichermodule betrieben wird. Die auszuführenden Regel- und Systemaufgaben umfassen dabei ortsgebundene und nicht-ortsgebundene Regel- und Systemaufgaben. Ortsgebundene Regel- und Systemaufgaben beziehen sich dabei auf lokale Stromnetze und sind beispielsweise die Sicherstellung der benötigten Netzspannung, die Blindleistungskompensation, die Regelung der Amplituden- und Phasenlage des Spannungssignals, das Bereitstellen einer lokalen Leistungsreserve für sich eventuell hinzuschaltende größere Stromabnehmer oder Einschaltstromspitzen und das Speichern von lokalen Energieüberschussmengen. Nicht-ortsgebundene Regel- und Systemaufgaben beziehen sich dabei auf nicht lokale Stromnetze und sind beispielsweise die Bereitstellung von primärer oder sekundärer Regelleistung. Die Regelleistung (auch Reserveleistung) gewährleistet die Versorgung bei unvorhergesehenen Ereignissen im Stromnetz. Dazu können kurzfristig Leistungsanpassungen bei regelfähigen Kraftwerken durchgeführt und schnell anlaufende Kraftwerke oder Energiespeicher wie die erfindungsgemäße Energiespeicheranlage eingesetzt werden. Weitere nicht-ortsgebundene Regel- und Systemaufgaben sind beispielsweise die Schwarzstartunterstützung im Falle eines Netzausfalls, allgemeine die Speicherung von Leistungsspitzen und die Blindleistungskompensation im nicht lokalen Stromnetz. Weitere ortsgebundene und nicht-ortsgebundene Regel- und Systemaufgaben für lokale und nicht lokale Stromnetze sind die Bereitstellung von Redundanz (Ausfallsicherheit) bei der Stromversorgung in Kombination mit den bereits vorhandenen Energielieferanten und ein Blindleistungsmangement.

Hierbei bezeichnet das nicht-lokale Stromnetz ein Stromnetz, das sich überregional über sehr große Gebiete erstreckt und in dem die nicht-ortsgebundenen Regel- und Systemaufgaben durchgeführt werden. Nicht-lokale Stromnetze sind beispielsweise Übertragungs- oder Verteilnetze (öffentliches Stromnetz). Das öffentliche Stromnetz in Deutschland setzt sich beispielsweise aus vier Übertragungsnetzen zusammen, die von den Netzbetreibern Amprion, 50Hertz, Tennet und TransnetzEnBW betrieben werden. Diese vier Übertragungsnetze bilden zusammen den Netzregelverbund für Deutschland. In anderen Ländern werden entsprechende Übertragungsnetze durch andere Netzbetreiber betrieben. In den Übertragungsnetzen wird die Frequenz des Stromnetzes stabil gehalten (Frequenzregulierung). Das übergeordnete europäische Verbundnetz aus den jeweiligen Übertragungsnetzen in den einzelnen Staaten ist ebenfalls als nicht-lokales Stromnetz anzusehen, wofür allerdings derzeit nur die Standards für die Regelenergie festgelegt sind. Die nicht-ortsgebundenen Regel- und Systemaufgaben werden in den jeweiligen Übertragungsnetzen durchgeführt. Als lokales Stromnetz im Sinne der Erfindung werden die Stromnetze bezeichnet, in denen die vorstehend beschriebenen ortsgebundenen Regel- und Systemaufgaben durchgeführt werden. Lokale Stromnetze sind in der Regel räumlich stark begrenzt, beispielsweise ein betriebsinternes Stromnetz auf einer Betriebsanlage oder ein Stromnetz innerhalb eines Hauses oder Gebäudekomplexes.

Die Netzanschlussschnittstelle bezeichnet eine Vorrichtung, mit der die verfügbare Energie im Energiespeichermodul in ein externes Stromkabel eingespeist oder aus diesem aufgenommen werden kann. Netzanschlussschnittstellen sind beispielsweise geeignet ausgelegte Steckverbindungen (Steckdosen), in die von außen zur Verbindung mit dem Stromnetz ein entsprechend ausgelegter Netzstecker eingesteckt werden kann. Die Netzanschlussschnittstellen sind beispielsweise für die zu transferierenden Energiemengen handelsübliche Anschlüsse. Der Anschluss an das nicht-lokale Stromnetz und jeweils an ein oder mehrere lokale Stromnetze kann vom Fachmann geeignet ausgestaltet werden, wobei der Anschluss so ausgestaltet ist, dass die Stromnetze (nicht-lokale(s) und lokale(s)) auch unabhängig voneinander von dem Energiespeichermodul mit Energie versorgt oder aus den Stromnetzen Energie abgenommen werden kann. Über eine der Netzanschlussschnittstellen kann auch die Versorgung des Energiespeichermoduls und seiner Komponenten und Module mit Betriebsstrom realisiert werden.

Die Datenschnittstelle bezeichnet eine Vorrichtung, mit der eine interne Datenleitung mit einer anderen von außen an das Energiespeichermodul herangeführte Datenleitung zur Herstellung einer Datenverbindung verbunden werden kann. Die Datenschnittstellen können beispielsweise handelsübliche Schnittstellen für Datenverbindungen sein. Die Datenleitungen im Energiespeichermodul und zwischen den Energiespeichermodulen können jede geeignete Form besitzen. In einem Ausführungsbeispiel ist die Datenleitung als Datenbussystem, wie beispielsweise ein Canbus, ein Profibus oder als Ethernet, ausgeführt. Die Datenschnittstellen können aber auch dafür ausgestaltet sein, eine Verbindung zu einem nicht kabelgebundenen Kommunikationsnetzwerk herzustellen, beispielsweise zu einem funkbasierten Netz, einem Mobilfunknetz, einem Netz nach IECG, einem kabelgebundenen Telefonnetz, einer Datenverbindung mittels der Stromkabel im Stromnetz oder einem Computernetz (beispielsweise das Internet). Vorteilhaft ist dabei das Vorhandensein mehrerer alternativer Schnittstellen. Im Falle einer unterbrochenen Verbindung über eines der vorstehenden Netze kann das Energiespeichermodul, insbesondere das Modulsteuersystem, dazu ausgebildet sein, über eine andere Schnittstelle des Energiespeichermoduls die Verbindung über ein alternatives Netz wieder herzustellen. Durch die Redundanz der Datenschnittstellen ist es möglich, über alternative Kommunikationsnetze möglicherweise wichtige externe Daten, insbesondere Steuerbefehle, dennoch zu empfangen.

Der Begriff "Empfangen" bezeichnet alle Arten von Vorgängen, bei denen externe Daten zum Energiespeichermodul oder zur Energiespeicheranlage hin übertragen werden. Diese externen Daten sind beispielsweise Steuerbefehle, auf deren Basis das Modulsteuersystem das Energiespeichermodul steuert. Externe Daten können auch Prüfsignale zur Überprüfung einer Datenverbindung von und nach extern oder andere Daten sein. Die externen Daten werden von externen Systemen übermittelt, beispielsweise Steuerungssysteme des lokalen Stromnetzes für ortsgebundene Regel- und Systemaufgaben und/oder Steuerungssysteme des nicht-lokalen Stromnetzes, eine übergeordnete Verbundsteuerung oder lokale Messstellen für ortsgebundene und/oder nicht-ortsgebundene Regel- und Systemaufgaben. Diese Steuerbefehle (externe Daten) umfassen die ortsgebundenen und nicht-ortsgebundenen Regel- und Systemaufgaben, die von dem erfindungsgemäßen Energiespeichermodul im Rahmen seiner Möglichkeiten ausgeführt werden. Die externen Daten (Steuerbefehle) können aber auch über eine Datenschnittstelle von einem Datenträger per Auslesen in einem entsprechenden Datenträgerlaufwerk (beispielsweise einer CD-ROM) oder über eine Datenträgerschnittstelle (beispielsweise von einem USB-Datenstick) empfangen werden. Alternativ können die externen Steuerbefehle (externe Daten) auch per Direkteingabe über eine entsprechende Benutzerschnittstelle (Bildschirm und Tastatur) empfangen werden.

Der Begriff "Aussenden" bezeichnet das Aussenden von Betriebsdaten, die im erfindungsgemäßen Energiespeichermodul oder in einer Energiespeicheranlage mit mehreren solcher Energiespeichermodule erzeugt wurden. Das Aussenden kann sich einerseits auf das Aussenden von Betriebsdaten des Energiespeichermoduls nach extern beziehen, damit die jeweiligen Betriebsdaten den zu empfangenen Regel- und Systemaufgaben zugrunde gelegt werden können. Das Aussenden kann sich aber auch auf das Aussenden eines Testsignals zum Prüfen einer bestehenden Datenverbindung über die Datenschnittstellen beziehen. Diese Verbindungsprüfung kann eine Prüfung einer externen Datenverbindung oder die Prüfung der Datenverbindung zu eventuell angeschlossenen Energiespeichermodulen in einer Energiespeicheranlage beziehen. Das Aussenden kann auch das Aussenden von Steuerbefehlen eines Modulsteuersystems zu anderen Modulsteuersystemen in einer Energiespeicheranlage mit mehreren Energiespeichermodulen umfassen.

Als Schwungradmodul wird hierbei die funktionale Einheit aus den jeweiligen Schwungradspeichereinheiten und deren mechanische Befestigung bezeichnet. Die Schwungradspeichereinheiten umfassen dabei den Rotor, über dessen Rotation die Energie in Form von mechanischer Rotationsenergie gespeichert und wieder angegeben werden kann, die Lager- und Motorkomponenten zum Beschleunigen, Abbremsen und Drehen des Rotors bei einer bestimmten Drehzahl und die Anschlüsse an andere sich im Modulgehäuse befindlichen Module, wie beispielsweise das Vakuummodul, oder eine interne Stromversorgung für die Module. Rotoren von Schwungradspeichereinheiten können je nach Ladezustand mit Drehzahl zum Beispiel von 50.000 Umdrehungen pro Minute rotieren. Ein typischer Drehzahlbereich liegt zwischen 15000 Umdrehungen pro Minute und der maximalen Drehzahl. Damit die Rotoren der Schwungradspeichereinheiten möglichst verlustarm rotieren und damit die Energie möglichst verlustarm speichern können, sind sie von einem Rotorgehäuse umschlossen, wobei während des Betriebs des Schwungradmoduls in den jeweiligen Rotorgehäusen ein möglichst niedriger Druck erzeugt wird. Je geringer der Druck und die Dichte des Gases im Rotorgehäuse ist, desto geringer sind die Reibungsverluste des Rotors am Füllgas des Rotorgehäuses. Daher wird das Gehäuse entweder mit einem leichtem Gas wie Helium gefüllt oder auf Drücke kleiner 10⁻³ mbar evakuiert. Das Schwungradmodul mit den Schwungradspeichereinheiten besitzt eine Modulspeicherkapazität mit einer Modulleistung, die mit der Anzahl der Schwungradspeichereinheiten skaliert. Die Speicherung der Energie in Form von Rotationsenergie ist reversibel, da aus den Schwungradspeichern je nach Bedarf die als Rotationsenergie gespeicherte Energie wieder entnommen und als elektrische Energie von dem Energiespeichermodul oder der Energiespeicheranlage in ein Stromnetz eingespeist werden kann und im umgekehrten Fall elektrische Energie aus dem Stromnetz entnommen und mechanisch in Form von Rotationsenergie in den Schwungsradspeichereinheiten gespeichert werden kann. Schwungradenergiespeicher besitzen den Vorzug, dass sie die aufzunehmenden oder abzugebenden Mengen an Energie sehr variabel und präzise für die Abnehmer bereitstellen können und diese Energie in Form von mechanischer Energie speichern. Damit stellen Schwungradenergiespeicher ein wesentlich kleineres Gefahrenpotential im Brandfall dar als beispielsweise eine größere Ansammlung an Batterien, zusammengeschaltet als Batterie-Energiespeicheranlage, oder Wasserstoffspeicheranlagen mit Wasserstofftanks mit dem brennbaren Wasserstoff als Gefahrenpotential. In Druckluftspeicheranlagen können dagegen zwar nicht-brennbare Gase zur Energiespeicherung verwendet werden, dennoch besitzen die Drucklufttanks ein Explosionspotential aufgrund des hohen Drucks in den Drucklufttanks. Somit stellen Schwungradspeichereinheiten eine umweltsicherere Technologie für die Energiebereitstellung im Vergleich zu anderen Speichertechnologien dar und sind für beliebig viele Lastzyklen pro Tag gut geeignet. Bei der Energiebereitstellung wird von negativer Energiebereitstellung gesprochen, wenn Energie aus dem Stromnetz aufgenommen und in den Schwungradspeichereinheiten in Form von mechanischer Rotationsenergie gespeichert wird. Entsprechend wird von positiver Energiebereitstellung gesprochen, wenn aus den Schwungradspeichereinheiten die in Form von mechanischer Rotationsenergie gespeicherte Energie mittels Abbremsen der Schwungräder (oder Rotoren) in das Stromnetz als elektrische Energie eingespeist wird. Hierbei ist die Fähigkeit von Schwungradspeichern, Energie innerhalb von wenigen Millisekunden zur Verfügung stellen zu können, ebenso vorteilhaft wie die Fähigkeit, die spezifizierte Leistung über einen Zeitraum von mehreren Minuten zu liefern. Bei einer Drehzahl von 50.000 Umdrehungen pro Minute kann eine Schwungradspeichereinheit zum Beispiel eine Leistung von 5 kWh aufnehmen oder abgeben.

Für viele Applikationen im Stromnetz ist es notwendig, dass ein Energiespeicher über ausreichend Kapazität und Leistung verfügt. Typischerweise spricht man ab einer Kapazität von 100kWh von großer Kapazität und ab Leistungen von 500kW von großer Leistung. Bei diesen Kapazitäten und Leistungen können bereits in Ortnetzen spürbare Netzdienstleistungen erbracht werden. Viele Anwendungen im Hochspannungsnetz verlangen eine Mindestleistung von einem bzw. fünf MW. Daher sollten Energiespeichermodule so dimensioniert werden, dass bereits ein einzelnes Energiespeichermodul lokal verwendet werden kann und wenige Energiespeichermodule zusammen als Energiespeicheranlage eine für das Übertragungsnetz ausreichende Leistung und Kapazität erzeugen. Daraus leitet sich auch die notwendige Kapazität und Leistung eines einzelnen Schwungradspeichers ab. Diese muss ausreichend sein, um den verfügbaren Platz im Modul so zu nutzen, dass die gewünschte Modulleistung und Modulkapazität erreicht wird. Schwungradspeichereinheiten mit ca. 5kWh Kapazität und 20kW Leistung lassen sich zum Beispiel in einem Container zu einem Energiespeichermodul mit 150kWh Kapazität und 600kW Leistung verschalten.

In einer Ausführungsform umfasst das Energiespeichermodul ein Kühl- und/ oder Heizmodul zur Entfernung zumindest interner thermischer Lasten beim Betrieb der Schwungradmoduls oder zur Klimatisierung beim Betrieb des Schwungradmoduls, vorzugsweise auch zur Erhaltung einer Mindesttemperatur. Das Kühlmodul bezeichnet hier eine Vorrichtung zur Anlagenkühlung, damit die internen thermischer Lasten, beispielsweise die elektrischen Verluste, die Reibungswärme beim Betrieb der Schwungradspeichereinheiten und die Abwärme der Module, wie beispielsweise des Vakuummoduls, abgeführt werden können. Eine zu große Innentemperatur des Modulgehäuses führt zu einem erhöhten Ausfallrisiko der sich darin befindlichen Elektronik, insbesondere der Leistungselektronik. Typischerweise sind hier maximale Temperaturen im Modulgehäuse von 45°C zulässig. Ein Heizmodul stellt dagegen sicher, dass Tiefsttemperaturen von 10°C im Modulgehäuse nicht unterschritten werden, um Kondenswasserbildung zu vermeiden. Dabei sind Außentemperaturbereiche von -20°C bis 50°C üblich und im Extremfall Tiefsttemperaturen von -30° und Höchsttemperaturen von 60°C zu tolerieren. Insofern Verluste es zulassen, sind passive Kühlungen/Heizungen wie zum Beispiel Plattenwärmetauscher an der Modulgehäusedecke als Heiz- und Kühlmodul zu bevorzugen, die passiv über Konvektion einen Kühlmittelumstrom und Wärmetausch ermöglichen, da sie den Gesamtanlagenwirkungsgrad weniger negativ beeinflussen.

Das Modulsteuersystem ist eine Komponente in dem Energiespeichermodul, die das Energiespeichermodul steuert, d.h., die die gewünschten Betriebszustände und Betriebsparameter einstellt und die das Energiespeichermodul automatisch entsprechend eines elektronisch erstellten Betriebsplans, der die gewünschten Betriebszustände als Funktion der Zeit enthält, steuert. Der Betriebsplan wird vom Modulsteuersystem aus zumindest den externen Daten (Steuerbefehle) bezüglich der ortsgebundenen Regel- und Systemaufgaben berechnet und erstellt, zu denen die externen Daten (Steuerbefehle) bezüglich der nicht-ortsgebundenen Regel- und Systemaufgaben hinzukommen oder hinzukommen können. Des Weiteren ist das Modulsteuersystem in der Lage, auf sich verändernde Verhältnisse im lokalen Stromnetz entsprechend zu reagieren und mittels Energieeinspeisung oder Energieaufnahme die Netzqualität des lokalen Stromnetzes zu erhöhen oder konstant zu halten oder bei einer Störung im lokalen Stromnetz die Netzqualität wieder zu verbessern. Die empfangenen externen Daten (Steuerbefehle) werden im Folgenden auch als Anweisungen bezeichnet. Der Begriff "Ausführen" bezeichnet hierbei das Steuern des Energiespeichermoduls durch das Modulsteuersystem gemäß den vorliegenden Steuerbefehlen zu den ortsgebundenen und nicht-ortsgebundenen Regel- und Systemaufgaben für die angeschlossenen Stromnetze. Die externen Daten werden beispielsweise von einer externen Steuereinheit übermittelt, die beispielsweise den Bedarf von Regelenergie für das nicht-lokale Stromnetz ermittelt und diesen Bedarf im Rahmen der freien (nicht für ortsgebundenen Regel- und Systemaufgaben benötigte) Kapazitäten des Energiespeichermoduls in Form von nicht-ortsgebundenen Regel- und Systemaufgaben von dem Energiespeichermodul über das Kommunikationsnetz anfordern kann. Weitere externe Systeme, von denen das Energiespeichermodul nicht-ortsgebundene Regel-und Systemaufgaben empfangen könnte, wären beispielsweise ein Leistungsstützungsverbund oder eine Strombörse, anhand derer Einspeisungen oder Energieabnahmen in bestimmten Betriebszeiten entsprechend als günstig identifiziert sind. Weitere externe Größen für nicht-ortsgebundene Regel-und Systemaufgaben sind beispielsweise der Blindleistungsbedarf, eine Spitzenlastkompensation oder benötigter lokaler Speicherbedarf im nicht-lokalen Stromnetz.

Zur Ausführung der Regel- und Systemaufgaben umfasst das Modulsteuersystem in einer Ausführungsform ein Prioritätenmanagement zum Ausführen der einzelnen externen Daten (Steuerbefehle), wobei die Ausführung der externen Steuerbefehle bezüglich ortsgebundener Regel- und Systemaufgaben in dem oder den lokalen Stromnetzen Vorrang vor der Ausführung der externen Steuerbefehle bezüglich nicht-ortsgebundener Regel- und Systemaufgaben in dem nicht-lokalen Stromnetz besitzt. Das Prioritätenmanagement kann als Datenspeicher ausgeführt sein, auf den das Modulsteuersystem vor Ausführung der externen Steuerbefehle zurückgreift und das gemäß den gesetzten Prioritäten die nächsten externen Steuerbefehle ausführt. Die Prioritäten können dabei gegenüber einem externen Zugriff unveränderlich auf dem Datenspeicher gespeichert sein. Eine Änderung der Prioritäten kann beispielsweise durch Austausch des entsprechenden Datenspeichers oder der entsprechenden Datei mit dem Prioritätenmanagement vor Ort im Energiespeichermodul möglich sein. Bei einem einzigen Energiespeichermodul ist die freie Kapazität entweder ausreichend, um die nicht-ortsgebundenen Regel- und Systemaufgaben im Normalfall zu erfüllen oder die zusätzliche Kapazität, die für ortsgebundenen Regel- und Speicheraufgaben reserviert ist, würde als mögliche Reserve im Ausnahmefall zur Lösung des Netzproblem nicht ausreichen. Insofern basiert der Vorrang der ortsgebundenen Regel- und Systemaufgaben auf den endlichen Modul- oder Anlagenspeicherkapazitäten und Modul- oder Anlagenleistungen.

In einer weiteren Ausführungsform ist das Modulsteuersystem bei einem gestörten Empfang der externer Daten (Steuerbefehlen) dazu vorgesehen, über die Modulspeicherkapazität und Modulleistung ausschließlich zur Ausführung ortsgebundenen Regel- und Systemaufgaben in dem oder den angeschlossenen lokalen Stromnetzen zu verfügen, bis der Empfang externer Daten wieder möglich ist. Zur Feststellung einer Störung des Datenempfangs kann dabei das Modulsteuersystem periodisch Testsignale nach extern aussenden und das Fehlen eines entsprechenden Rücksignals als Verifikation einer Störung des Empfangs verarbeiten. Ein solches Testsignal ist beispielsweise ein so genannter digitaler Handschlag, über den das Bestehen der Kommunikationsverbindung geprüft wird. Die Bevorzugung ortsgebundener Regel- und Systemaufgaben ist zweckmäßig, da nach einem Ausfall der Kommunikation nach extern das Modulsteuersystem keine Rückmeldung mehr über den augenblicklichen Zustand des nicht-lokalen Stromnetzes bekommt. Sofern das Modulsteuersystem dann einfach die vorliegenden Aufgaben ohne weiter zu empfangende externer Daten (Steuersignale) abarbeiten würde, könnte dies in besonderen Umständen sogar zu einem Ausfall des Stromnetzes infolge von Überlastung führen. Daher ist es vorteilhaft, nur die ortsgebundenen Regel- und Systemaufgaben durchzuführen, zu denen das Energiespeichermodul verpflichtet ist und der die Zweckmäßigkeit dieser ortsgebundenen Aufgaben gegebenenfalls über eigene Messeinheiten selbst überwachen kann.

In einer Ausführungsform umfasst das Energiespeichermodul eine oder mehrere Messeinheiten zur Messung einzelner oder mehrerer relevanter Daten in den jeweiligen angeschlossenen Stromnetzen, und das Modulsteuersystem ist dazu vorgesehen, die Steuerung des Energiespeichermoduls für die ortsgebundenen Regel- und Systemaufgaben anhand der externen Daten (Steuerbefehle) in diesen lokalen und nicht-lokalen Stromnetzen auf Basis der gemessenen relevanten Daten auszuführen. Die Messeinheiten können dabei im lokalen und/oder nicht-lokalen Stromnetz integriert oder an einer oder mehreren Stellen am lokalen Stromnetz angeordnet sein. Die Messeinheiten können auch am Verbindungspunkt zwischen dem Energiespeichermodul und den lokalen und/oder nicht-lokalen Stromnetzen angeordnet sein. Messeinheiten im Rahmen der vorliegenden Erfindung sind beispielsweise Messsonden zur Messung der Netzfrequenz und Netzspannung als Beispiel für relevante Daten für das angeschlossene lokale Stromnetz. Weitere Messgrößen sind beispielsweise der Spannungsverlauf als Funktion der Zeit, der Phasenwinkel, der Sternpunkt, die Netzfrequenz, der Netzstrom und andere Größen.

Der Fachmann kann im Rahmen der vorliegenden Erfindung geeignete Messeinheiten oder Messsonden auswählen und an der geeigneten Position anordnen. Sei beispielsweise die gewünschte Netzfrequenz 50 Hz und stellen die Messeinheiten ein Absinken der Netzfrequenz fest, so wird das Mastersteuersystem automatisch auf Basis der aktuellen gemessenen Netzfrequenz (als gemessene relevante Daten) und einer in dem Modulsteuersystem hinterlegten Reaktionsfolge Energie in das lokale Stromnetz einspeisen (ortsgebundene Regel- und Systemaufgabe), bis die Netzfrequenz wieder auf dem gewünschten Wert liegt. Weitere Beispiele sind die Messung des Phasenwinkels im lokalen Stromnetz, um die entsprechende Bildleistungskompensation bereitzustellen, oder die Spannungsmessung im Falle von zu viel oder zu wenig Lastabnahme im lokalen Netz zum Erhalt der Spannungsqualität. Für andere Regel- und Systemaufgaben sind entsprechende andere Reaktionsfolgen in dem Modulsteuersystem hinterlegt.

In einer weiteren Ausführungsform umfasst das Energiespeichermodul einen Aufgabenspeicher zur Speicherung der empfangenen externen Daten (Steuerbefehle) bezüglich der nicht-ortsgebundenen und ortsgebundenen Regel- und Systemaufgaben, auf den das Modulsteuersystem zur Steuerung des Energiespeichermoduls gemäß der nicht-ortsgebundenen und ortsgebundenen Regel- oder Systemaufgaben zugreift. Der Aufgabenspeicher kann ein geeigneter Datenspeicher im Energiespeichermodul sein. Er kann dabei als Teil des Modulsteuersystems ausgeführt sein oder ein separater Speicher sein. In beiden Fällen ist das Modulsteuersystem so mit dem Aufgabenspeicher über eine Datenverbindung verbunden, dass es auf den Aufgabenspeicher jederzeit zugreifen, die darin gespeicherten nicht-ortsgebundenen und ortsgebundenen Regel- und Systemaufgaben auslesen und gemäß dieser das Energiespeichermodul steuern kann. Der Fachmann kann im Rahmen der vorliegenden Erfindung den schaltungstechnischen Zugriff des Modulsteuersystems auf den Aufgabenspeicher und das anzusteuernde Energiespeichermodul geeignet ausgestalten. Die Anweisungen (externe Daten oder Steuerbefehle) zu den nicht-ortsgebundenen und ortsgebundenen Regel- und Systemaufgaben können im Aufgabenspeicher beispielsweise als Anweisung "Speichere aus dem nicht-lokalen Stromnetz xx kWh am y.Tag ab zz Uhr" gespeichert sein. In einem anderen Beispiel könnte die Anweisung im Aufgabenspeicher als "Speise heute ab zz Uhr xx kW pro Stunde in das lokale Stromnetz ein". Das konkrete Datenformat der Anweisungen kann vom Fachmann im Rahmen der vorliegenden Erfindung geeignet gewählt werden. Diese Anweisungen (oder Aufgaben) im Aufgabenspeicher können beispielsweise eine Regelleistung oder eine Spannungs- oder Stromstabilisierung betreffen. Die Anweisungen (oder Aufgaben) können dabei mit oder ohne Zeitbezug abgespeichert werden. Eine Anweisung (oder Aufgabe) ohne Zeitbezug könnte beispielsweise "Liefere in Abhängigkeit der Stromnetzfrequenzabweichung von 50 Hz entsprechend einer Vorgabekurve die entsprechende Regelleistung" lauten.

In einer weiteren Ausführungsform ist das Modulsteuersystem dazu ausgestaltet, Betriebsdaten des Energiespeichermoduls zu erfassen, auszuwerten und ein Meldeprotokoll, umfassend die Betriebsdaten über eine der Datenschnittstellen nach extern aussenden, beispielsweise zu entsprechenden externen Systemen, von denen das Energiespeichermodul die externen Daten erhält. Damit können zumindest die Betriebsdaten für die zu empfangenden externen Daten (Steuerbefehle) berücksichtigt werden. Die Betriebsdaten des Energiespeichermoduls geben beispielsweise an, welche Modulspeicherkapazität und Modulleistung vorliegt und welche (momentane) freie nicht-lokale Kapazität (die Modulspeicherkapazität, die nicht für die ortsgebundenen Regel- und Systemaufgaben benötigt wird) und (momentane) freie nicht-lokale Leistung (die Modulleistung, die nicht für die ortsgebundenen Regel- und Systemaufgaben benötigt wird) das Energiespeichermodul für nicht-ortsgebundene Aufgaben hat und/oder welche ortsgebundenen Regel- und Systemaufgaben in Zukunft geplant sind. Die Betriebsdaten können dabei von dem Modulsteuersystem über Betriebssensoren gemessen werden oder die Betriebsdaten werden von anderen Modulen im Modulgehäuse, beispielsweise das Schwungradmodul, an das Modulsteuersystem über entsprechende Datenleitungen, die die Module untereinander verbinden, übermittelt. Die auf diese Weise erfassten Betriebsdaten werden nach einem in dem Modulsteuersystem abgelegten Schema vom Modulsteuersystem ausgewertet, beispielsweise durch ein entsprechendes Softwareprogramm, und als Betriebsdaten in einem vorher festgelegten Format über die vorstehend bereits beschriebenen Datenschnittstellen ausgesendet. Der Zeittakt für die Aussendungen beträgt beispielsweise 1 Hertz oder weniger. Das Modulsteuersystem erfasst beispielsweise die Ist-Werte der Energiemodul-Speicherzustände beziehungsweise der Speicherzustände der einzelnen Schwungradspeichereinheiten, die Zustände der angeschlossenen Stromnetze (beispielsweise Spannung und Strom) und verrechnet diese Daten zur Ausführung der ortsgebundenen und nicht-ortsgebundenen Regel- und Systemaufgaben. Das Meldeprotokoll kann beispielsweise zusätzlich zu den Betriebsdaten die Identität des Energiespeichermoduls in Form einer charakteristischen Bezeichnung wie einer Kennnummer und möglicherweise den Ort, an dem das Energiespeichermodul aufgestellt ist, in Form von Geokoordinaten umfassen. Das Meldeprotokoll hat dabei ein geeignetes Datenformat, um von den gewünschten externen Stellen empfangen und verarbeitet werden zu können. Die ausgesendeten Betriebsdaten inklusive der Information über Ist- und Plandaten von freien Modulspeicherkapazitäten und freien Modulleistungen können dann von einer externen Steuereinheit empfangen und entsprechend verplant werden und anschließend entsprechende anlagenspezifische nicht-ortsgebundene oder ortsgebundenen Regel- und Systemaufgaben in Form von externen Daten (Steuerbefehlen) an das Energiespeichermodul zurück übermittelt werden.

In einer Ausführungsform ist das Modulsteuersystem dazu vorgesehen, ortsgebundene Regel- und Systemaufgaben in einem oder mehreren angeschlossenen lokalen Stromnetzen und/oder nicht-ortsgebundene Regel- und Systemaufgaben in einem angeschlossene nicht lokalen Stromnetzen auszuführen und dazu zumindest das Speichermodul zur Aufnahme oder Abgabe von Energie über die eine oder die mehreren Netzschnittstellen anweist und einen entsprechenden Energiefluss mittels einer Regeleinheit geeignet auf die lokalen und/oder nicht lokalen Stromnetze verteilt. Durch die gleichzeitige Verarbeitung ortsgebundener und nicht-ortsgebundener Aufgaben und die entsprechende simultane Steuerung aller angeschlossenen Stromnetze können die Bedürfnisse in angeschlossenen lokalen und nicht lokalen Stromnetzen gleichzeitig und effizient erfüllt werden. Ferner kann die Anlagenspeicherkapazität und Anlagenleistung durch die Kombination von ortsgebundenen und nicht-ortsgebundenen Bedürfnissen effektiv ausgenutzt werden (effizienter Betrieb) und hilft damit, Ressourcen zu sparen.

In einer weiteren Ausführungsform ist der elektrische Zwischenkreis als ein gemeinsamer Gleichstrombus (DC-Bus), der mit einem Stromrichter oder Durchflusswandler verbunden ist, ausgestaltet. Im Betrieb regelt das Modulsteuersystem die Spannung des DC-Busses auf ein definiertes, konstantes Niveau (Soll-Gleichspannung) innerhalb spezifizierter Grenzwerte. Damit kann das Energiespeichermodul gegenüber anderen möglichen elektrischen Verschaltungen selbständig und unabhängig von den möglichen Ladezuständen der Schwungradspeichereinheiten eine konstante Spannung für das angeschlossene Stromnetz bis zur völligen Entladung des Energiespeichermoduls bereitstellen. Die Soll-Gleichspannung hängt dabei von den angeschlossenen externen Stromnetzen und den im Energiespeichermodul verwendeten Bauteilen ab. Ein technisch sinnvoller Bereich für die Zwischenkreisspannung bei Anschluss der Anlage an ein Niederspannungsnetz liegt zum Beispiel zwischen 550V und 1000V. Die untere Grenze wird im wesentlichen durch die Spannungslage des Niederspannungsnetzes definiert wohingegen die obere Grenze im wesentlichen durch die technischen Eigenschaften der verwendeten Bauteile im Energiespeichermodul bestimmt wird. Für Mittelspannungsnetze oder Gleichspannungsnetze kann die Soll-Gleichspannung im Zwischenkreis aus technischen und wirtschaftlichen Gründen auch bei anderen Werten liegen die sich an der Spannungslage dieser Netze orientiert. In einem Ausführungsbeispiel ist die Soll-Gleichspannung im Gleichspannungszwischenkreis 750V ± 5V.

In einer weiteren Ausführungsform ist die Anzahl der Schwungradspeichereinheiten im Schwungradmodul darauf angepasst, eine Modulspeicherkapazität für das Energiespeichermodul bereitzustellen, die mindestens ausreicht, um über einen Zeitraum von mehr als 30 s Nennstrom bis hin zu einigen Stunden in ein nicht lokales Stromnetz einspeisen zu können. Beispielsweise können in einem Standard 40" Container bis zu 30 Schwungspeicher mit einer Drehzahl von bis zu 50000 U/min und einer individuellen Motorleistung von 200kW bei 5kWh individueller Kapazität ca. 3 Minuten Strom liefern. Ein typischer Drehzahlbereich für den Betrieb des Schwungradspeichers liegt je nach Ladezustand zwischen 15000 Umdrehungen pro Minute und der maximalen Drehzahl.

In einer weiteren Ausführungsform umfasst das Vakuummodul eine gemeinsame Vakuumpumpstufe zur Erzeugung eines Betriebsvakuums und ein Rohrsystem, an das die Schwungradspeichereinheiten angeschlossen sind. Somit kann mit einer nur einfach vorhandenen Vakuumpumpstufe eine Vielzahl an Schwungradspeichereinheiten, die in kompakter Bauweise im Modulgehäuse angeordnet sind, versorgt werden. Somit kann mit einer niedrigen Anzahl an Komponenten das benötigte Betriebsvakuum effektiv für die Schwungradspeichereinheiten erzeugt werden. Je nach gewünschtem Wirkungsgrad und Vakuumvolumen kann es notwendig sein ein Vakuummodul aus Vorpumpe und Hauptpumpe aufzubauen, das im Betrieb Betriebsdrücke kleiner 10⁻³ mbar sicherstellt. Die einzelnen Schwungradspeichereinheiten sind dabei über ein Rohrsystem miteinander verbunden. Das Rohrsystem verfügt üblicherweise über eine Ringleitung mit ausreichendem Volumen und kleinen Stichleitungen, die die Ringleitung mit den einzelnen Schwungradspeichereinheiten verbinden. Die Leitungsquerschnitte sollen so gewählt werden, dass auch bei sehr niedrigem Druck eine ausreichende Evakuierung der einzelnen Schwungradspeichereinheiten ermöglicht wird, selbst wenn der Volumenstrom nicht mehr laminarer Natur ist. So ist zum Beispiel in einem Modulgehäuse als 40" Container eine Ringleitungsdurchmesser von >150mm und ein Stichleitungsdurchmesser von >50mm sinnvoll.

In einer Ausführungsform sind die eine oder die mehreren Netzanschlussschnittstellen und die eine oder die mehreren Datenschnittstellen zum Anschluss mit weiteren Energiespeichermodulen vorgesehen. Dadurch wird ein modularer Aufbau einer Energiespeicheranlage mit mehreren erfindungsgemäßen Energiespeichermodulen ermöglicht.

Die Erfindung betrifft des Weiteren eine Energiespeicheranlage mit mehreren erfindungsgemäßen Energiespeichermodulen, wobei die Energiespeicheranlagen zumindest über die Datenschnittstellen mittels eines gemeinsamen Datennetzes miteinander verbunden sind und die jeweiligen Modulsteuersysteme zur gemeinsamen Steuerung der Energiespeicheranlage zur Bereitstellung einer gemeinsamen Anlagenspeicherkapazität und Anlagenleistung aus der Summe aller Modulspeicherkapazitäten und Modulleistungen in den an die Energiespeicheranlage angeschlossenen Stromnetzen ausgestaltet sind. Hierbei kann die Energiespeicheranlage entweder direkt mit einem nicht lokalen Stromnetz und einem oder mehreren lokalen Stromnetzen verbunden sein oder über ein angeschlossenes lokales Stromnetz indirekt mit einem nicht lokalen Stromnetz verbunden sein, sofern das lokale Stromnetz selber mit dem nicht lokalen Stromnetz verbunden ist.

Durch den modularen Aufbau kann die Gesamtkapazität (Anlagenkapazität) und Gesamtleistung (Anlagenleistung) der Energiespeicheranlage an die Bedürfnisse in den lokalen und/oder nicht-lokalen Stromnetzen flexibel und schnell angepasst und damit ein guter Kompromiss zwischen Betriebsaufwand und Betriebsnutzen bei der Netzqualität und der verfügbaren Regelenergie getroffen werden. Durch den modularen Aufbau kann die Energiespeicheranlage auch im späteren Betrieb je nach Bedarf erweitert oder verkleinert werden, um auf schwankende Bedürfnisse an Energie in den angeschlossenen Stromnetzen reagieren zu können. Somit kann die Energiespeicheranlage stets effektiv, d.h. ohne ungenutzte Überkapazität, betrieben werden. Für eine Erweiterung der erfindungsgemäßen modular aufgebauten Energiespeicheranlage muss lediglich ein neu hinzukommendes Energiespeichermodul an das Datennetz für die bereits vorhandenen Energiespeichermodulen und an die Netzanschlüsse der Energiespeicheranlage angeschlossen werden. Für den modularen Aufbau umfasst jedes Energiespeichermodul einen Netzanschluss, damit jedes Energiespeichermodul zu einem separaten Stromanschluss an ein oder mehrere Stromnetze geeignet ist und anlagentechnisch damit weitgehend autonom betrieben werden kann. Das Datennetz (Datenleitungen) in der Energiespeicheranlage zwischen den Energiespeichermodulen kann jede geeignete Form besitzen. In einem Ausführungsbeispiel ist das Datennetz als Datenbussystem, wie beispielsweise ein Canbus, ein Profibus oder als Ethernet, ausgeführt. Das Datennetz zwischen den einzelnen Energiespeichermodulen dient den Modulsteuersystemen zum gegenseitigen Datenaustausch bezüglich der gemeinsamen Steuerung der Energiespeicheranlage. Hier werden die auszuführenden Regel- und Systemaufgaben auf die an der Gesamtanlage angemeldeten einzelnen Energiespeichermodule verteilt, so dass die Energiespeicheranlage die Regel- und Systemaufgaben im Rahmen ihrer Anlagenspeicherkapazität und Anlagenleistung erfüllen kann. Beispielsweise wird die aufzunehmende Energie oder die abzugebende Energie zu gleichen Energiemengen (Teilen) auf die Energiespeichermodule verteilt. Die einzelnen Energiespeichermodule speisen dann die entsprechenden Teil-Energiemengen in die Stromnetze oder nehmen die entsprechenden Teil-Energiemengen aus den Stromnetzen auf. Der Fachmann kann auch einen anderen Verteilungsplan in den Modulsteuereinheiten hinterlegen.

In einer Ausführungsform sind die Netzanschlussschnittstellen aller Energiespeichermodule in einem gemeinsamen Aufschaltpunkt zum Anschluss an ein nicht lokales Stromnetz und mindestens ein lokales Stromnetz verbunden. Damit werden die Modulspeicherkapazitäten und Modulleistungen aller Energiespeichermodule zu einer Anlagenspeicherkapazität und Anlagenleistung in einem Punkt zusammengeführt, und alle mit dem Aufschaltpunkt verbundenen Stromnetze profitieren von den vorhandenen Energiespeicheranlagen. Außerdem ermöglicht der Aufschaltpunkt einen schnellen und einfachen Anschluss weiterer Energiespeichermodule an bereits angeschlossene Stromnetze, ohne dass dafür diese Stromnetzanschlüsse bei einer Erweiterung (oder beim Entfernen eines Energiespeichermoduls) modifiziert werden müssen. Energiespeicheranlagen mit nur einem Anschluss an ein Stromnetz, beispielsweise ein lokales Stromnetz, das mit einem nicht lokalen Stromnetz verbunden ist, sind typischerweise über einen Schalter mit dem einzigen Stromnetz verbunden. Hier würde keine Steuerung eines Energieflusses benötigt, da alle Energie in das einzige Stromnetz fließt (oder umgekehrt). Der Schalter ist dafür vorgesehen, bei einem Netzausfall die Energiespeicheranlage vom Stromnetz trennen zu können.

In einer weiteren Ausführungsform ist zwischen dem Aufschaltpunkt und den angeschlossenen Stromnetzen eine Regeleinheit angeordnet, die dazu ausgestaltet ist, einen Energiefluss zwischen zwei oder mehr angeschlossenen Stromnetzen und der Energiespeicheranlage zu regeln oder zu steuern. Wären die lokalen und nicht-lokalen Stromnetze lediglich starr mit dem Aufschaltpunkt der Energiespeicheranlage verbunden, so würde die von der Energiespeicheranlage eingespeiste Energie nur in das Stromnetz eingespeist, das den größeren Energiebedarf hat. In der vorliegenden Erfindung ist die Regeleinheit außerdem dazu ausgestattet, dass nach Abtrennen des einen Stromnetzes die anderen angeschlossenen Stromnetze weiterhin wie gewünscht mit Energie versorgt werden oder aus diesen Energie aufgenommen werden kann, da die Energiespeicheranlage im Rahmen der vorliegenden Erfindung simultan eine Mehrzahl an getrennten Stromnetzen versorgen muss. Die Regeleinheit steuert den Energiefluss zu den angeschlossenen Netzen in der von dem Modulsteuersystem vorgesehenen Weise. In einer bevorzugten Ausführungsform ist die Regeleinheit außerdem dazu vorgesehen, ein oder mehrere der angeschlossenen Stromnetze im Bedarfsfall von der Energiespeicheranlage zu trennen. Sollte eines der angeschlossenen Stromnetze ausfallen, so trennt die Regeleinheit dieses Stromnetz unter Umständen sofort innerhalb weniger Millisekunden von der Energiespeicheranlage, damit diese weiterhin für die anderen Stromnetze betriebsbereit bleibt. Ansonsten würde gegebenenfalls ein Kurzschluss oder eine Überlastsituation eintreten. In einer weiteren Ausführungsform umfasst die Regeleinheit dazu eine Regelbox mit mindestens einem Regelglied und einen oder mehrere Trennschalter, die durch das Regelglied gesteuert werden und deren Anzahl von der Anzahl der an die Regeleinheit angeschlossenen Stromnetze abhängt. Die Regelbox ist dabei direkt oder über die Regeleinheit mit dem Modulsteuersystem über eine Datenleitung verbunden, über die das Modulsteuersystem Konfigurationsdaten der Regelfunktion an das Regelglied übertragen kann.

In einer weiteren Ausführungsform ist eines der Modulsteuersysteme als Mastersteuersystem und die anderen Modulsteuersysteme als Slave-Steuersysteme vorgesehen, wobei das Mastersteuersystem dazu vorgesehen ist, den Slave-Steuersystemen Anweisungen über das Datennetz zur Steuerung der Schwungradspeichereinheiten zur gemeinsamen Ausführung der auszuführenden Regel- und Systemaufgaben in den angeschlossenen Stromnetzen übermittelt. Hierbei verfügt das Mastersteuersystem (führendes Modulsteuersystem) über die Modulspeicherkapazitäten und Modulleistungen aller mit ihr verbundenen Energiespeichermodule und führt die nicht-ortsgebundenen Regel- und Systemaufgaben im Rahmen der Anteile der Anlagenspeicherkapazitäten und/oder Anlagenleistung aus, die nicht für die ortsgebundenen Regel- und Systemaufgaben benötigt werden. Die Slave-Steuersysteme (auch abhängige Steuersysteme genannt) bezeichnen dabei Modulsteuersysteme, die in Abhängigkeit von den Anweisungen eines Mastersteuersystem ihrer jeweiligen Energiespeichermodule steuern. Die Kommunikation zwischen dem Mastersteuersystem und den verbundenen Slave-Steuersystemen zur Steuerung der Energiespeicheranlage kann beispielsweise aktiv über ein Meldeprotokoll erfolgen, wobei die Slave-Steuersysteme und/oder das Mastersteuersystem nach Aussendung des Meldeprotokolls mit den entsprechenden Antworten oder Reaktionen auf das Meldeprotokoll reagieren können. Die Kommunikation kann auch aufgrund direkter Anfragesignale durch das Modulsteuersystem initiiert werden. Die Slave-Steuersysteme steuern und überwachen die Betriebszustände der jeweiligen Energiespeichermodule und übermitteln dem Mastersteuersystem die Betriebsdaten BD ihrer Energiespeichermodule über die Datenleitung. Die Slave-Steuersysteme werden hier gemeinsam von dem Mastersteuersystem gesteuert, indem es die Slave-Steuersysteme zur Ausführung der Regel- und Systemaufgaben anweist und die einzelnen Slave-Steuersysteme die Anweisungen in entsprechende Maschinenparameter für ihre Schwungradspeichereinheiten umsetzen. Alternativ könnte auf die Slave-Steuersysteme verzichtet und alle deren Funktionen ebenfalls vom Mastersteuersystem ausgeführt werden. Die Steuerung besteht darin, dass das Mastersteuersystem den einzelnen Energiespeichermodulen vorschreibt, wieviel Energie aus dem Schwungsradspeichereinheiten mittels Abbremsung abgegeben oder in die einzelnen Schwungsradspeichereinheiten mittels Beschleunigung aufgenommen werden soll. Damit diese Energieaufnahme oder Abgabe wie gewünscht durchgeführt werden kann, steuern daraufhin die Slave-Steuersysteme die Antriebsmotoren der Schwungradspeichereinheiten zur Abbremsung oder Beschleunigung der einzelnen Rotoren in den Schwungradspeichereinheiten.

Die Erfindung betrifft des Weiteren ein Verfahren zum modularen Aufbau und Bereitstellen von Energiespeicherkapazität und Leistung für Regel- und Systemaufgaben in Stromnetzen durch eine erfindungsgemäße Energiespeicheranlange mit ein oder mehreren erfindungsgemäßen Energiespeichermodulen mit jeweils einem in einem Modulgehäuse des jeweiligen Energiespeichermoduls angeordneten Schwungradmodul mit einem gemeinsamen Rahmen in Form eines offenen Quaders mit mehreren Rahmenteilen, der gleichzeitig die Lager der Schwungradspeichereinheiten trägt und auf dem eine Vielzahl an Schwungradspeichereinheiten montiert sind , umfassend die Schritte:
- Bestimmen der benötigten Anlagenspeicherkapazität und Anlagenleistung für die Ausführung der gewünschten Regel- und Systemaufgaben in dem oder den betreffenden anzuschließenden Stromnetzen;
- Vormontieren der Schwungradspeichereinheiten in dem Rahmen außerhalb des Modulgehäuses;
- Einsetzen des Schwungmoduls mit Rahmen nach der Vormontage als Ganzes in das Modulgehäuse;
- Aufstellen einer Anzahl an erfindungsgemäßen Energiespeichermodule mit jeweiligen Modulspeicherkapazitäten, Modulleistungen und Modulsteuersystemen an einem Aufstellort, wobei die Anzahl der Energiespeichermodule so gewählt ist, dass die Summe aller Modulspeicherkapazitäten und Modulleistungen der benötigten Anlagenspeicherkapazität und Anlagenleistung entspricht;
- Verankern der Modulgehäuse der Energiespeichermodule am Boden des Aufstellorts; und
- Anschließen der Energiespeichermodule in einem gemeinsamen Aufschaltpunkt, Anschließen des Aufschaltpunktes an die betreffenden Stromnetze und Verbinden der Energiespeichermodule mittels eines gemeinsamen Datennetzes miteinander zu einer gemeinsamen Energiespeicheranlage und gemeinsames Steuern der Energiespeicheranlage über die jeweiligen Modulsteuersysteme.

### Kurze Beschreibung der Abbildungen

Diese und andere Aspekte der Erfindung werden im Detail in den Abbildungen wie folgt gezeigt:
- Fig.1:: eine Ausführungsform des erfindungsgemäßen Energiespeichermoduls in perspektivischer Ansicht;
- Fig.2:: eine andere Ausführungsform des erfindungsgemäßen Energiespeichermoduls in perspektivischer Ansicht;
- Fig.3:: eine schematische Darstellung der Module des erfindungsgemäßen Energiespeichermoduls;
- Fig.4:: eine schematische Darstellung einer erfindungsgemäßen - weiter mit der ursprünglichen Seite 28 - Energiespeicheranlage;
- Fig.5:: eine Ausführungsform der Regeleinheit mit Regelbox;
- Fig.6:: eine Ausführungsform des erfindungsgemäßen Verfahrens zum variablen Bereitstellen von ortsgebundenen und nicht-ortsgebundenen Energien für Regel- und Systemaufgaben.

### Detaillierte Beschreibung der Ausführungsbeispiele

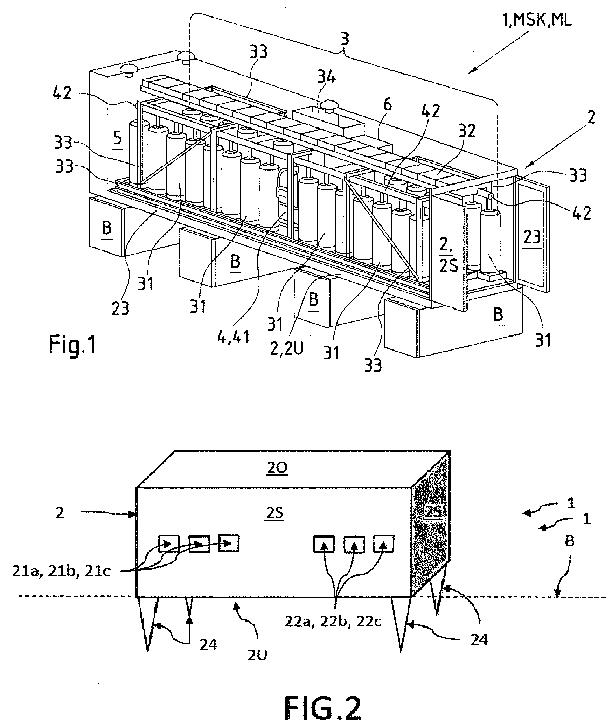

Fig. 1 zeigt eine Ausführungsform des erfindungsgemäßen Energiespeichermoduls 1 in perspektivischer Ansicht. Das mobile Energiespeichermodul 1 besitzt ein umschließendes Modulgehäuse 2, das in dieser Darstellung nur angedeutet ist, um für eine bessere Übersicht die Sicht auf die Module im Modulgehäuse freizugeben. Das Modulgehäuse hat in dieser Ausführungsform eine längliche Quaderform mit vier Seitenflächen 2S, einer Oberseite 20 (nicht gezeigt) und einer Unterseite 2U, wovon der Rand sichtbar ist. Eine der Seitenflächen 2S ist als Tür ausgestaltet, damit die Module 3, 4, 5 in das Modulgehäuse 2 eingebracht und gegebenenfalls wieder entnommen werden können. Durch die Tür hat gegebenenfalls auch Wartungspersonal Zutritt zum Energiespeichermodul 1. Im Modulgehäuse 2 ist ein Schwungradmodul 3 mit insgesamt achtundzwanzig Schwungradspeichereinheiten 31 angeordnet, die über einen elektrischen Zwischenkreis 32 zur Bereitstellung einer gemeinsamen Modulspeicherkapazität MSK und Modulleistung ML verbunden sind. Die Anzahl der Schwungradspeichereinheiten 31 ist darauf angepasst, dass das Energiespeichermodul 1 über die so bereitgestellte Modulkapazität MSK und Moduleistung ML über einen Zeitraum von mehr als 30 s Strom in ein nicht lokales Stromnetz 5 einspeisen kann. Die einzelnen Schwungradspeichereinheiten 31 können dabei im Mittel 20kW an Leistung transferieren. Damit hat dieses Energiespeichermodul 1 eine Modulspeicherkapazität von 560kW. Die Anzahl der Schwungradspeichereinheiten 31 in einem Energiespeichermodul 1 kann von Energiespeichermodul zu Energiespeichermodul variieren. Vorteilhaft ist eine hohe Anzahl an Schwungradspeichereinheiten 31 pro Energiespeichermodul 1, damit die Modulspeicherkapazität MSK und Modulleistung ML des Energiespeichermoduls 1 vergrößert wird. Die Rotationsachse der zylinderförmigen Rotoren der Schwungsradspeichereinheiten 31 steht dabei senkrecht zur Aufstellfläche des Modulgehäuses 2, hier als vierteilig gegliedertes Betonfundament B gezeigt. In anderen Ausführungsformen kann das Modulgehäuse 2 aber auch auf einen geglätteten und gegebenenfalls gehärteten Boden B positioniert werden. Die Schwungradspeichereinheiten 31 sind dabei auf einen Rahmen 33 montiert, der ebenfalls die Lager der Schwungradspeichereinheiten trägt 31. Die Form des hier gezeigten Rahmens 33 ist an die Form des Modulgehäuses 2 und der Tür am Ende des Modulgehäuses 2 angepasst, so dass das Schwungradmodul 3 aus Rahmen 33 und Schwungradspeichereinheiten 31 und dem Zwischenkreis 32 als Ganzes in das Modulgehäuse 2 eingesetzt und wieder entnommen werden kann. Der Rahmen umfasst senkrechte Pfosten auf jeweils % der Modulgehäuselänge, die an der Ober- und Unterseite im Modulgehäuse über waagerechte Rahmenteile mit den gegenüberliegenden Pfosten verbunden sind, um jeweils einen den Querschnitt des Modulgehäuses umlaufenden Rechteckrahmen zu bilden. Diese insgesamt fünf Rechteckrahmen sind über waagerechte Träger entlang der Längsrichtung des Modulgehäuses 2 auf jeder Längsseite oben und unten miteinander verbunden. Die resultierende Rahmenform bildet einen offenen Quader innerhalb des Modulgehäuses 2, wobei die Schwungradspeichereinheiten 31 zwischen den oberen und unteren Trägern auf jeder Seite gehaltert und gelagert sind. Die Schwungspeichereinheiten 31 sind dabei so am Rahmen 33 des Schwungradmoduls 3 montiert, dass die mechanische Energie einer einzelnen Schwungradspeichereinheit 31 im Falle eines außerplanmäßigen Versagens durch im Rahmen 33 befindliche Strukturbauteile so abgeleitet werden kann, dass benachbarte Schwungradspeichereinheiten 31 im Betrieb nicht beeinflusst werden. Dazu sind die benachbarten Schwungradspeichereinheiten 31 mit einem ausreichenden Abstand nebeneinander angeordnet. Das Vakuummodul 4 ist in dieser Ausführungsform mittig im Modulgehäuses 2 angeordnet, zumindest mit der Vakuumpumpstufe 41, die über ein Rohrsystem 42 mit den einzelnen Schwungradspeichereinheiten 31 des Schwungradmoduls 3 zum Evakuieren des Rotorbehälters in den Schwungradspeichereinheiten 31 verbunden sind. Das Modulgehäuse 2 besitzt an der Innenseite des Modulgehäuses 2 eine Isolationsschicht 23, die im Bodenbereich und im Türbereich angedeutet ist. Die Isolierschicht 23 ermöglicht das Erzeugen eines kontrollierten Raumklimas im Modulgehäuse 2 in Zusammenwirken mit dem Kühlmodul 5. Das Kühlmodul 5 ist schematisch angedeutet und soll interne thermische Lasten beim Betrieb des Schwungradmoduls 3 aus dem Modulgehäuse 2 nach außen abführen. Das Modulgehäuse 2 kann dabei aus Metall, vorzugsweise aus Stahl gefertigt sein, um eine robuste Hülle für den Transport und Betrieb des Energiespeichermoduls darzustellen. Die Abmessungen können an die Anwendung und an die Form der Module in Modulgehäuse 2 angepasst sein. Vorzugsweise besitzt das Modulgehäuse 2 eine standardisierte Form, damit es mit den verfügbaren Transportmitteln transportiert werden kann und keine Spezialbehandlung für den Transport benötigt. Vorzugsweise ist das Modulgehäuse 2 ein ISO-Container, wie hier gezeigt. Das Modulgehäuse 2 umfasst ferner ein Modulsteuersystem 6, das für eine geeignete Steuerung der Module 3, 4, 5 und gegebenenfalls weiterer hier nicht gezeigter Module im Modulgehäuse 2 vorgesehen ist, um die Ausführung von Regel- und Systemaufgaben in Stromnetzen zu ermöglichen. Dafür sind die Module 3, 4, 5 und das Modulsteuersystem 6 über einen Datenbus 61 miteinander verbunden, der nicht dargestellt ist, damit die Steuerbefehle vom Modulsteuersystem 6 an die jeweiligen Module 3, 4, 5 zu deren Umsetzung übermittelt werden können.

Fig. 2 zeigt schematisch das Modulgehäuse 2 des Energiespeichermoduls 1 aus Fig. 1 in einer perspektivischen Ansicht mit einer Oberseite 20, einer Unterseite 2U und vier Seitenflächen 2S. Das Modulgehäuse 2 ist außerdem wind- und wasserdicht ausgeführt (geschlossene Seitenflächen 2S, Bodenfläche 2U und Oberseite 20). An der vorderen Seitenfläche 2S des Modulgehäuses 2 sind jeweils drei Netzanschlussschnittstellen 21 a, 21 b, 21 c angeordnet, beispielsweise für den Anschluss an ein lokales und/oder nicht lokales Stromnetz LS, NS zur Ausführung der Regel- und Systemaufgaben und für die Stromversorgung der Module im Modulgehäuse 2. Die ebenfalls drei Datenschnittstellen 22a, 22b, 22c sind zum Empfangen EM zumindest der in den angeschlossenen Stromnetzen auszuführenden Regel- und Systemaufgaben ORS, NORS als externe Daten ED und zur Aussendung von Betriebsdaten Daten BD nach außen vorgesehen. Durch das Vorhandensein von drei Schnittstellen kann eine Redundanz über das Verwenden unterschiedliche Kommunikationsnetze für die Kommunikation erreicht werden. An der Unterseite 2U des Modulgehäuses 2 sind in den vier Ecken der Unterseite 2U Bodenfixiermittel 24 zur sicheren und reversiblen Verankerung des Energiespeichermoduls 1 am Boden B angeordnet. Die Bodenfixierungsmittel 24 sind in der hier gezeigten Ausführungsform Bodenanker, damit das Energiespeichermodul auf einem Fundament positioniert werden kann und dennoch eine für den Betrieb ausreichende Standfestigkeit besitzt, um die statischen und dynamischen Lasten der Schwungradspeichereinheiten 31 im Betrieb in den Boden ableiten zu können. Die Bodenanker 24 dringen aufgrund des Gewichts des Energiespeichermoduls 1 in ihrer vollen Länge in den Boden B ein und geben dem Modulgehäuse 2 dadurch eine große Standfestigkeit

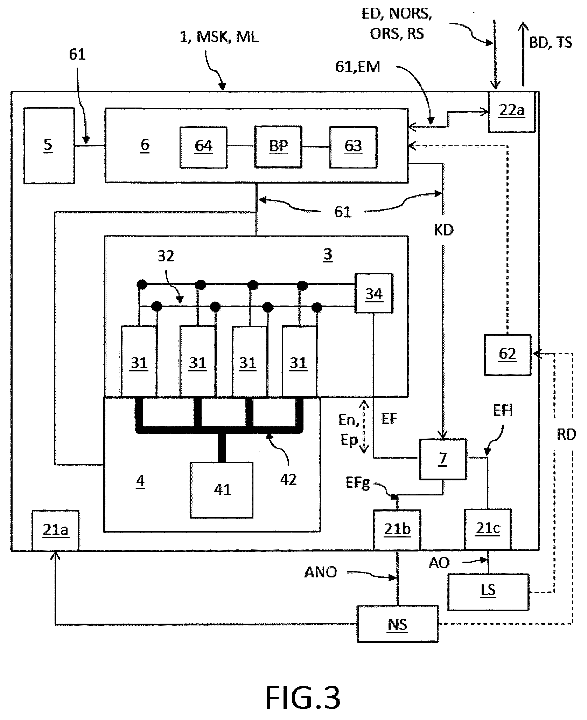

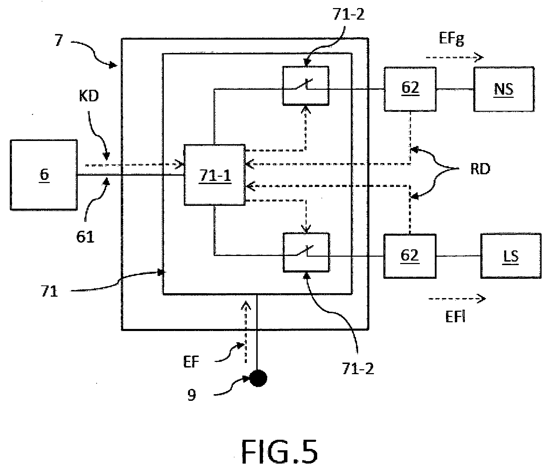

Fig. 3 zeigt eine schematische Darstellung des erfindungsgemäßen Energiespeichermoduls 1 mit den internen Anschlüssen und Datenverbindungen. Das Energiespeichermodul 1 ist in dieser Ausführungsform aus Gründen der Übersichtlichkeit mit lediglich vier Schwungradspeichereinheiten 31 zur reversiblen Speicherung von Energie dargestellt. Die Energiespeichermodule 1 für den realen Betrieb umfassen dagegen deutlich mehr Schwungradspeichereinheiten 31. Die Schwungradspeichereinheiten sind über einen Zwischenkreis 32 parallel geschaltet, der hier als gemeinsamer Gleichstrombus 32, der mit einem oder mehreren Stromrichter 34 oder Durchflusswandler 34 verbunden ist, ausgestaltet ist. Die einzelnen Module des Energiespeichermoduls sind über Datenleitung 61, beispielsweise einem Datenbus 61, miteinander verbunden. An das Energiespeichermodul 1 sind über die Netzanschlussschnittstelle 21 c ein lokales Stromnetz LS und über die Netzanschlussschnittstelle 21 b ein nicht lokales Stromnetz NS angeschlossen. Das nicht lokale Stromnetz NS ist zudem mit der Netzanschlussschnittstelle 21 a verbunden, damit das Energiespeichermodul 1 mit dem notwendigen Betriebsstrom für die Module versorgt wird (interne Stromleitungen sind hier nicht explizit gezeigt). Damit die aus dem Schwungradmodul 3 abgegebene Energie Ep in die beiden angeschlossenen Stromnetze LS, NS in richtiger Aufteilung eingespeist werden kann, umfasst das Energiespeichermodul 1 zur Aufspaltung des Energieflusses in separate Energieflüsse EFg und EFI in die separaten Stromnetze LS und NS eine Regeleinheit 7, die in Figur 5 im Detail beschrieben ist. Somit kann die gesamte Modulspeicherkapazität MSK und die Modulleistung ML zur Aufnahme En und Abgabe Ep von Energie an ein oder mehrere an das Energiespeichermodul 1 angeschlossenen Stromnetze NS, LS verwendet werden. Bei einem Energiespeichermodul 1, das lediglich an ein mit dem nicht-lokalen Stromnetz NS verbundenes lokales Stromnetz LS angeschlossen ist, umfasst die Regeleinheit 7 zumindest einen Trennschalter. Hier ist eine Aufspaltung der Energieflüsse nicht notwendig, da der gesamte Energiefluss EF in das lokale Stromnetz LS mündet.

Alternativ kann dass System auch mit einem zweiten oder mehreren zusätzlichen Durchflusswandler(n) 34 und einem zweiten oder mehreren zusätzlichen Trennschalter(n) 7 ausgestattet werden. In diesem Fall kann die Regelbox 7 ggf. entfallen. Das Energiespeichermodul 1 umfasst eine Schnittstelle 22a (hier ist aus Übersichtsgründen nur eine der möglichen mehreren Datenschnittstellen gezeigt) zum Empfangen EM externer Daten ED bezüglich der auszuführenden ortsgebundenen und nicht-ortsgebundenen Regel- und Systemaufgaben ORS, NORS und ein Modulsteuersystem 6 zum Speichern S und Ausführen AO, ANO der externen Daten (Steuerbefehle). Über die Datenschnittstelle 22a werden auch Betriebsdaten BD und/oder ein Testsignal TS zum Überprüfen einer bestehenden Kommunikationsverbindung nach extern ausgesandt. Entsprechend empfängt die Datenschnittstelle 22a ein entsprechendes Rücksignal RS. Hierbei verfügt das Modulsteuersystem 6 für die auszuführenden ANO nicht ortsgebundenen Regel- und Systemaufgaben NORS im nicht lokalen Stromnetz NS über die Modulspeicherkapazitäten MSK und Modulleistungen ML nur im Rahmen der Anteile der Modulspeicherkapazitäten MSK und/oder Modulleistung ML, die nicht für Ausführung AO die ortsgebundenen Regel- und Systemaufgaben ORS benötigt werden. Dazu umfasst das Modulsteuersystem 6 ein Prioritätenmanagement 64 zum Ausführen AO, ANO der einzelnen externen Daten ED (Steuerbefehle), wobei die Ausführung AO der externen Daten ED (Steuerbefehle) bezüglich ortsgebundener Regel- und Systemaufgaben ORS in dem lokalen Stromnetz LS Vorrang vor der Ausführung ANO der externen Daten ED (Steuerbefehle) bezüglich nicht-ortsgebundener Regel- und Systemaufgaben NORS in dem nicht-lokalen Stromnetz NS besitzt. Dieses Prioritätsmanagement 64 ist beispielsweise als Datenspeicher mit einer daraus gespeicherten Prioritätenfolge. Die Prioritätenfolge kann in Form einer Datei vorliegen, die beispielsweise vor Ort ersetzt oder geändert werden kann. In einer Ausführungsform ist vorgesehen, dass aus Anlagensicherheitsgründen auf das Prioritätsmanagement 64 nicht über die Datenschnittstelle 22a zugegriffen werden kann. Die Steuerung durch das Modulsteuersystem 6 besteht unter anderem darin, dass es den einzelnen Schwungradspeichereinheiten 31 vorschreibt, wieviel Energie mittels Abbremsung abgegeben oder mittels Beschleunigung aufgenommen werden soll, und in einer geeigneten Ansteuerung der Regeleinheit 7 mittels der Übermittlung von Konfigurationsdaten KD für die Reglerfunktion. Das Modulsteuersystem umfasst des Weiteren einen Aufgabenspeicher 63, in dem die empfangen EM externen Daten ED zu den auszuführenden Regel- und Systemaufgaben gespeichert werden. Der Speicherung kann eine Prüfung auf Herkunft und Inhalt der externen Daten ED vorausgehen und gegebenenfalls bei erfolgloser Prüfung verweigert werden. Das Modulsteuersystem 6 kann auf den Aufgabenspeicher 63 zugreifen und einen Betriebsplan BP gemäß der externen Daten ED und der Prioritäten im Prioritätenmanagement 64 erstellen. Die Steuerung des Energiespeichermoduls 1 erfolgt dann nach dem erstellten Betriebsplan BP. Der Betriebsplan kann auch Anweisungen zur Ansteuerung des Kühlmoduls 5 und des Vakuummoduls 4 umfassen. Das Vakuummodul ist über das Rohrsystem 42 (schwarz dargestellt) mit den Rotorgehäusen der Schwungradspeichereinheiten 31 verbunden und erzeugt das notwendige Betriebsvakuum mit einer an das Rohrsystem 42 angeschlossenen Vakuumpumpstufe 41, die beispielsweise eine Vorpumpe und eine Turbomolekularpumpe umfassen kann. Zur Ausführung AO, ANO der ortsgebundenen und nicht-ortsgebundenen Regel- und Systemaufgaben ORS, NORS in den lokalen und nicht lokalen Stromnetze LS, NS misst das Energiespeichermodul 1 mittel einer oder mehrerer Messeinheiten 62 relevante Daten RD in dem angeschlossenen Stromnetzen LS, NS und legt der Ausführung AO, ANO diese relevanten Daten RD zugrunde (als gestrichelter Pfeil zum Modulsteuerssystem 6 dargestellt).

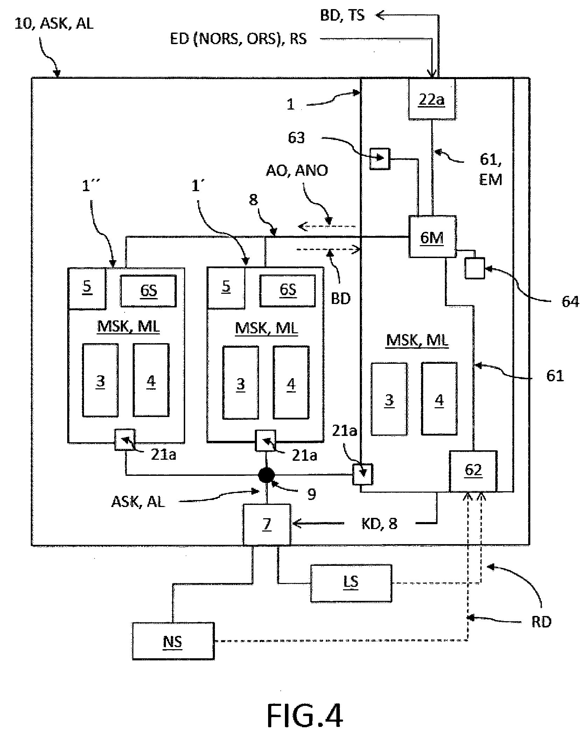

Fig. 4 zeigt ein Ausführungsbeispiel für die erfindungsgemäße Energiespeicheranlage 10. Die Energiespeicheranlage 10 hat in dieser Ausführungsform drei Energiespeichermodule 1, 1', 1" mit jeweils einem Schwungradmodul 3 zur reversiblen Speicherung von Energie pro Energiespeichermodul 1, 1', 1 " mit jeweils einer Modulspeicherkapazität MSK und einer Modulleistung ML. Die drei Energiespeichermodule 1, 1', 1" teilen sich auf in ein Mastermodul mit einem Mastersteuersystem 6M zur Steuerung der Energiespeicheranlage 10 und zwei Slave-Steuersystemen 6S in den Energiespeichermodulen 1', 1". Das hier gezeigte Ausführungsbeispiel ist nur exemplarisch zu verstehen. Die Anzahl der Energiespeichermodule pro Energiespeicheranlage 10 hängt von der jeweiligen gewünschten Anwendung ab und kann daher stark variieren. Die Energiespeichermodule 1, 1', 1 " sind hier über einen gemeinsamen Aufschaltpunkt 9 verbunden, so dass deren Modulkapazitäten MSK und Modulleistungen ML in Summe als Anlagenspeicherkapazität ASK und Anlagenleistung AL der Energiespeicheranlage 10 für Regel- und Systemaufgaben NORS, ORS zur Verfügung steht. Die Energiespeichermodule 1, 1', 1" sind über ein Datennetz 8, beispielsweise ein Datenbus 8, miteinander verbunden. Dabei ist dieses Datennetz 8 erweiterbar, damit gegebenenfalls zu einem späteren Zeitpunkt zusätzliche Energiespeichermodule 1"' zu den bestehenden drei Energiespeichermodulen 1, 1', 1" hinzugefügt werden können. Gleiches gilt für den Netzanschluss 21 a an den gemeinsamen Aufschaltpunkt 9. Die Energiespeichermodule umfassen einen oder mehrere Netzanschlüsse 21 a, 21 b, 21c (letztere beiden sind hier nicht gezeigt), die in dieser Ausführungsform über einen gemeinsamen Aufschaltpunkt 9 zum Anschluss an die Stromnetze LS, NS verbunden sind. Über den Aufschaltpunkt können die nicht-ortsgebundener Regel-und Systemaufgaben NORS im nicht-lokalen Stromnetz NS und die ortsgebundenen Regel- und Systemaufgaben ORS in dem lokalen Stromnetz LS mittels Aufnahme En und Abgabe Ep von Energie aus/an das oder die angeschlossenen Stromnetze LS, NS ausgeführt werden. Zur Aufspaltung des Energieflusses EF am Aufschaltpunkt in separate Energieflüsse EFg, EFI in die separaten Stromnetze NS, LS umfasst die Energiespeicheranlage 10 eine Regeleinheit 7, siehe auch Fig.5. Somit kann die gesamte Anlagenspeicherkapazität ASK und die Anlagenleistung AL zur Aufnahme En und Abgabe Ep von Energie an ein oder mehrere an die Energiespeicheranlage 10 angeschlossenen Stromnetze NS, LS verwendet werden. Bei einer Energiespeicheranlage 10, die lediglich an ein mit dem nicht-lokalen Stromnetz NS verbundenes lokales Stromnetz LS angeschlossen ist, umfasst die Regeleinheit 7 zumindest einen Trennschalter. Hier ist eine Aufspaltung der Energieflüsse EF nicht notwendig, da der gesamte Energiefluss EF in das lokale Stromnetz LS mündet. Das Mastersteuersystem 6M ist zur Gesamtsteuerung aller an das Datennetz 8 angeschlossenen Energiespeichermodule 1, 1', 1" ausgebildet und umfasst zumindest eine Datenschnittstelle 22a zum Empfangen EM externer Daten ED (Steuerbefehle) bezüglich der auszuführenden ortsgebundenen und nicht-ortsgebundenen Regel- und Systemaufgaben ORS, NORS. Zur Ausführung AO, ANO der Regel- und Systemaufgaben ORS, NORS verfügt das Mastersteuersystem 6M über die Modulspeicherkapazitäten MSK und Modulleistungen ML aller mit ihr verbundenen Energiespeichermodule 1, 1', 1" und führt dabei die nicht-ortsgebundenen Regel- und Systemaufgaben NORS nur im Rahmen der Anteile der Anlagenspeicherkapazitäten ASK und/oder Anlagenleistung AL aus ANO, die nicht für die ortsgebundenen Regel- und Systemaufgaben ORS benötigt werden. Die Komponenten des Mastersteuersystems 6M sind im Detail aus Figur 3 ersichtlich. Die anderen Energiespeichermodule 1', 1" (auch als Slave-Module bezeichnet), umfassend in dieser Ausführungsform jeweils ein Slave-Steuersystem 6S, das die Betriebszustände BZ des jeweiligen Slave-Moduls 1, 1' überwacht und steuert und dem Mastersteuersystem 6M die Betriebsdaten BD der Slave-Module 1', 1"über das Datennetz 8 übermitteln. Die Slave-Module 1,1' werden hier gemeinsam von dem Mastersteuersystem 6M gesteuert, indem es die Slave-Steuereinheiten 6S zur Ausführung der Regel- und Systemaufgaben ORS, NORS anweist und die einzelnen Slave-Steuereinheiten 6S die Anweisungen in entsprechende Maschinenparameter für die Schwungradspeichereinheiten 31 umsetzen. Die Steuerung besteht darin, dass das Mastersteuersystem 6M den einzelnen Energiespeichermodulen 1, 1', 1" vorschreibt, wieviel Energie aus dem Schwungsradspeichereinheiten 31 mittels Abbremsung abgegeben oder in die einzelnen Schwungsradspeichereinheiten 31 mittels Beschleunigung aufgenommen werden soll. Damit diese Energieaufnahme oder Abgabe wie gewünscht durchgeführt werden kann, steuern daraufhin die Slave-Steuereinheiten 6S die Antriebsmotoren der Schwungradspeichereinheiten 31 zur Abbremsung oder Beschleunigung der einzelnen Schwungradspeichereinheiten 31.

Fig. 5 zeigt ein Ausführungsbeispiel der Regeleinheit 7, die in diesem Ausführungsbeispiel an ein lokales Stromnetz LS und an ein nicht-lokales Stromnetz NS angeschlossen ist. Damit die Regeleinheit 7 den Energiefluss EF zwischen den angeschlossenen Stromnetzen LS, NS und dem Energiespeichermodul 1 oder der Energiespeicheranlage 10 regeln und im Bedarfsfall ein oder mehrere der angeschlossenen Stromnetze, hier das lokale Stromnetz LS und/oder das nicht-lokale Stromnetz NS, von dem Energiespeichermodul 1 oder der Energiespeicheranlage 10 trennen kann, umfasst die Regeleinheit 7 in dieser Ausführungsform eine Regelbox 71 mit einem Regelglied 71-1 und separate Trennschalter 71-2 für jedes der angeschlossenen Stromnetze LS, NS. Die Modulsteuereinheit 6 (oder Mastersteuersystem 6M) ist über eine Datenverbindung 61 (oder ein Datennetz 8) mit dem Regelglied 71-1 der Regelbox 71 verbunden und übermittelt der Regelbox 71, hier direkt dem Regelglied 71-1, zur Steuerung der Energieflüsse entsprechende Konfigurationsdaten der Reglerfunktion KD. Aufgrund der Konfigurationsdaten der Reglerfunktion KD steuert das Regelglied 71-1 die Verteilung des vom Aufschaltpunkt 9 eingehenden Energieflusses EF auf die angeschlossenen Stromnetze LS, NS als Energiefluss EFI für das lokale Stromnetz LS und als Energiefluss EFg für das nicht-lokale Stromnetz NS. In diesem Ausführungsbeispiel ist lediglich exemplarisch die Verteilung des Energieflusses EF bei Einspeisung von Energie in beide angeschlossene Stromnetze LS, NS gezeigt. Die Regelbox 71 ist gleichermaßen dafür ausgestaltet, einen Energiefluss aus einem der angeschlossenen Stromnetze LS, NS und einen Energiefluss in das andere angeschlossene Stromnetz LS, NS zu steuern, wobei je nach Größe der beiden Energieflüsse entweder der negative Energieüberschuss von dem Energiespeichermodul 1 oder der Energiespeicheranlage 10 gespeichert oder der positive Energieüberschuss von dem Energiespeichermodul 1 oder der Energiespeicheranlage 1 bereitgestellt wird. Das Energiespeichermodul 1 oder die Energiespeicheranlage 10 ist hier nicht explizit gezeigt, sondern nur symbolisch über die entsprechenden Komponenten 6, 6M, 61, 62, 7, 8 dargestellt. Die Regelbox 71 empfängt von entsprechenden Messeinheiten 62 simultan die relevanten Daten RD aus beiden angeschlossenen Stromnetzen LS, NS, woraus das Regelglied 71-1 das Vorhandensein der beiden angeschlossenen Stromnetze LS, NS mittels in dem Regelglied 71-1 hinterlegten Kriterien oder Schwellwerte für die relevanten Daten RD ableitet. Sollte eines oder beide der angeschlossenen Stromnetze LS, NS aufgrund eines Netzausfalls nicht mehr zur Verfügung stehen, so manifestiert sich der Ausfall des jeweiligen Stromnetzes LS, NS in den entsprechenden, an das Regelglied 71-1 übermittelten relevanten Daten RD, woraufhin das Regelglied 71-1 automatisch entsprechende Trenn-Anweisungen (gestichelter Pfeil) an den oder die betreffenden Trennschalter 72-2 zur Trennung der Energiespeicheranlage 1 von dem oder den angeschlossenen Stromnetzen LS, NS aussendet, woraufhin der oder die Trennschalter 71-2 das oder die vormals angeschlossenen Stromnetze LS, NS von dem Energiespeichermodul1 oder der Energiespeicheranlage 10 trennen. Die Trennung des angeschlossenen Stromnetzes erfolgt dabei innerhalb weniger Millisekunden. Bei der Trennung von nur einem Stromnetz LS oder NS bleibt das Energiespeichermodul 1 oder die Energiespeicheranlage 10 weiterhin für die anderen noch weiterhin angeschlossenen Stromnetze betriebsbereit. Damit kann bei Ausfall eines Stromnetzes LS oder NS ein Kurzschluss oder eine Überlastsituation effektiv verhindert werden. Das hier gezeigte Ausführungsbeispiel mit einem angeschlossenen lokalen Stromnetz LS und einem angeschlossenen nicht-lokalen Stromnetz NS ist nur ein Bespiel für zwei angeschlossene Stromnetze. Die Regeleinheit 7, insbesondere die Regelbox 71, kann in anderen Ausführungsformen auch an mehr als zwei Stromnetze angeschlossen sein. Die zwei oder mehr angeschlossenen Stromnetze können auch jeweils lokale Stromnetze sein, von denen zumindest eines der lokalen Stromnetze mit dem nicht-lokalen Stromnetz zur Ausführung der nicht-ortsgebundenen Regel- und Systemaufgaben verbunden ist.

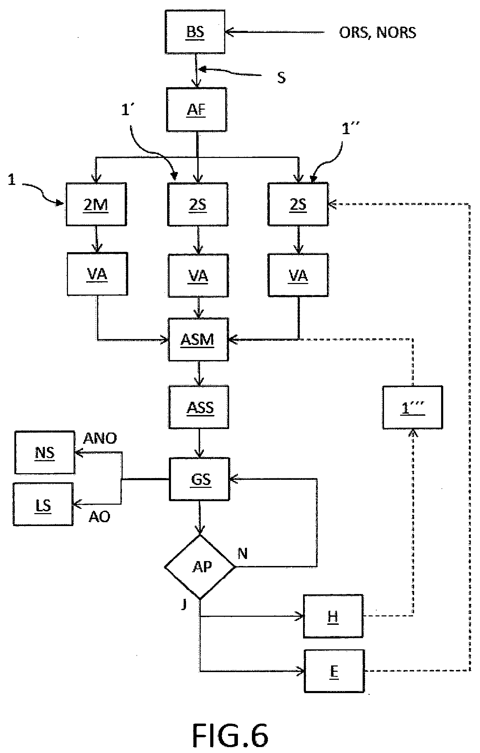

Fig. 6 zeigt eine Ausführungsform des erfindungsgemäßen Verfahrens zum variablen Bereitstellen von ortsgebundenen und nicht-ortsgebundenen Energien für Regel- und Systemaufgaben ORS, NORS. Zuerst wird die benötigten Anlagenspeicherkapazität ASK und Anlagenleistung AL für die Ausführung AO, ANO der gewünschten Regel-und Systemaufgaben ORS, NORS an dem oder den betreffenden anzuschließenden Stromnetzen LS, NS bestimmt BS. Danach wird eine geeignete Anzahl an erfindungsgemäßen Energiespeichermodule 1, 1', 1" mit jeweiligen Modulspeicherkapazitäten MSK, Modulleistungen ML und Modulsteuersystemen 6 an einem Aufstellort aufgestellt AF, wobei die Anzahl der Energiespeichermodule 1, 1', 1" so gewählt ist, dass die Summe aller Modulspeicherkapazitäten MSK und Modulleistungen ML der benötigten Anlagenspeicherkapazität ASK und Anlagenleistung AL entspricht. Vor dem Betrieb werden die Modulgehäuse 2 der Energiespeichermodule 1, 1', 1" noch am Boden B des Aufstellorts verankert VA, damit diese die statischen und dynamischen Belastungen während des Betriebs der Energiespeicheranlage 10 aufnehmen können. Die Energiespeichermodule 1, 1', 1" werden ferner in einem gemeinsamen Aufschaltpunkt 9 angeschlossen ASM und der Aufschaltpunktes 9 mit den betreffenden Stromnetze LS, NS verbunden (angeschlossen ASS). Gleichfalls werden die Energiespeichermodule 1, 1', 1" mittels eines gemeinsamen Datennetzes 8 miteinander zu einer gemeinsamen Energiespeicheranlage 10 verbunden VB, so dass ein gemeinsames Steuern GS der Energiespeicheranlage über die jeweiligen Modulsteuersysteme 6 ermöglicht wird. Sollte sich der Bedarf nach Ausführung von Regel- und Systemaufgaben in den angeschlossenen Stromnetzen LS, NS im Laufe der Zeit ändern, so kann die Energiespeicheranlage 10 geeignet an den geänderten Bedarf an Anlagenspeicherkapazität ASK und Anlagenleistung AL angepasst AP werden, indem weitere Energiespeichermodule 1"' gemäß der vorstehenden Verfahrensschritte hinzugefügt H oder eines oder mehrere Energiespeichermodule 1" aus der Energiespeicheranlage 10 entfernt E werden, nachdem für das jeweils zu entfernenden Energiespeichermodul 1 " alle Netzanschlüsse 21 a, 21 b, 21 c vom Aufschaltpunkt 9, alle Datenschnittstellen 22a, 22b, 22c von Datennetz 8 entfernt und das Modulgehäuse 2 vom Aufstellort gelöst wurde.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erfindungsgemäßes Energiespeichermodul
- 1', 1", 1"': weitere erfindungsgemäße Energiespeichermodule
- 10: Energiespeicheranlage mit mehreren erfindungsgemäßen Energiespeichermodulen
- 2: Modulgehäuse
- 2U: Unterseite des Modulgehäuses
- 2S: Seitenfläche des Modulgehäuses
- 20: Oberseiten des Modulgehäuses
- 21 a, 21 b, 21 c: Netzanschlussschnittstelle
- 22a, 22b, 22c: Datenschnittstellen
- 23: Isolierschicht
- 24: Bodenfixiermittel
- 3: Schwungradmodul
- 31: Schwungradspeichereinheit
- 32: Zwischen kreis
- 33: (Montage)Rahmen für die Schwungsradspeichereinheiten
- 34: Stromrichter oder Durchflusswandler
- 4: Vakuummodul
- 41: Vakuumpumpstufe
- 42: Rohrsystem
- 5: Kühlmodul
- 6: Modulsteuersystem
- 6M: Mastersteuersystem (führendes Modulsteuersystem)
- 6S: Slave-Steuersystem (abhängiges Modulsteuersystem)
- 61: Datenbus (im Energiespeichermodul oder zwischen verschiedenen Energiespeichermodulen)
- 62: Messeinheit
- 63: Aufgabenspeicher
- 64: Prioritätenmanagement
- 7: Regeleinheit (im Energiespeichermodul oder in der Energiespeicheranlage außerhalb der Energiespeichermodule)
- 71: Regelbox
- 71-1: Regelglied
- 71-2: Trennschalter
- 8: Datennetz zur Verbindung verschiedener erfindungsgemäßer Energiespeichermodule
- 9: Aufschaltpunkt
- AF: Aufstellen einer Anzahl an Energiespeichermodule an Aufstellorten
- AL: Anlagenleistung der Energiespeicheranlage
- ANO: Ausführen der nicht-ortsgebundenen Regel- und Systemaufgaben
- AO: Ausführen der ortsgebundenen Regel- und Systemaufgaben
- AP: Anpassen der Energiespeicheranlage an einen geänderten Bedarf an Anlagenspeicherkapazität und Anlagenleistung
- ASK: Anlagenspeicherkapazität der Energiespeicheranlage
- ASM: Anschließen der Energiespeichermodule an einen gemeinsamen Aufschaltpunkt
- ASS: Anschließen des Aufschaltpunktes an die Stromnetze
- B: Boden, Fundament
- BD: Betriebsdaten
- BP: Betriebsplan
- BS: Bestimmen der benötigten Anlagenspeicherkapazität und Anlagenleistung
- E: Entfernen eines Energiespeichermoduls aus einer Energiespeicheranlage
- ED: externe Daten (Steuerbefehle)
- EF: Energiefluss
- EFg: Energieflussanteil für das nicht lokale Stromnetz
- EFI: Energieflussanteil für das lokale Stromnetz
- EM: Empfangen von Daten (externe Daten)
- En: Aufnahme von Energie aus dem Stromnetz (negative Energie)
- Ep: Abgabe von Energie an das Stromnetz (positive Energie)
- GS: gemeinsames Steuern der Energiespeicheranlage
- H: Hinzufügen von Energiespeichermodule(n) zur Energiespeicheranlage
- KD: Konfigurationsdaten der Reglerfunktion
- LS: lokales Stromnetz
- ML: Modulleistung
- MSK: Modulspeicherkapazität
- NORS: nicht-ortsgebundene Regel- und Systemaufgaben
- NS: nicht lokales Stromnetz
- ORS: ortsgebundene Regel- und Systemaufgaben
- RD: relevante Daten
- RS: Rücksignal
- TS: Testsignal
- VA: Verankern der Modulgehäuse am Boden des Aufstellorts
- VB: Verbinden der Energiespeichermodule mittels eines gemeinsamen Datennetzes

## Patentansprüche

1. Ein mobiles Energiespeichermodul (1) zur Bereitstellung einer Energiespeicherkapazität und Leistung für Regel- und Systemaufgaben in Stromnetzen (LS, NS) mit einem umschließenden Modulgehäuse (2) zum Absichern des Inhalts des Modulgehäuses gegenüber Einwirkungen von außen während eines Transports oder Betriebs, wobei das Modulgehäuse mindestens eine Netzanschlussschnittstelle (21 a, 21 b, 21 c), mindestens eine Datenschnittstelle (22a, 22b, 22c) zum Empfangen (EM) externer Daten (ED) als Steuerbefehle und zum Aussenden von Betriebsdaten (BD) nach extern, ein Schwungradmodul (3) mit einer Vielzahl an Schwungradspeichereinheiten (31), die über einen elektrischen Zwischenkreis (32) zur Bereitstellung einer gemeinsamen Modulspeicherkapazität (MSK) und Modulleistung (ML) mit der mindestens einer Netzanschlussschnittstelle (21 a, 21 b, 21 c) verbunden sind, ein Vakuummodul (4) zur Erzeugung eines für den Betrieb des Schwungradmoduls (3) benötigten Mindestvakuums in den jeweiligen Schwungradspeichereinheiten (31) und ein Modulsteuersystem (6) für eine geeignete Steuerung der Module (3, 4, 5,...) im Modulgehäuse (2) umfassend das Schwungradmodul (3) und das Vakuummodul (4), umfasst,
**dadurch gekennzeichnet,**
**dass** das Schwungradmodul (3) einen gemeinsamen Rahmen (33) in Form eines offenen Quaders mit mehreren Rahmenteilen umfasst, der gleichzeitig die Lager der Schwungradspeichereinheiten trägt, sodass der Rahmen ein Vormontieren der Schwungradspeichereinheiten (31) in dem Rahmen (33) außerhalb des Modulgehäuses (2) und ein Einsetzen des Schwungmoduls mit Rahmen (33) nach der Vormontage als Ganzes in das Modulgehäuse (2) ermöglicht und der so ausgestaltet ist, dass das Schwungradmodul (3) als Ganzes auch wieder entnommen werden kann.

2. Das Energiespeichermodul (1) nach Anspruch 1,
**dadurch gekennzeichnet,**
**dass** das Modulgehäuse (2) zumindest allseits wind- und wasserdicht ausgeführt ist und allseits eine Isolationsschicht (23) besitzt, die geeignet ist, ein kontrolliertes Raumklima im Modulgehäuse (2) aufrecht zu erhalten, wobei die Isolierschicht (23) innen am oder im Modulgehäuse (2) angeordnet, vorzugsweise umfasst das Modulgehäuse (2) an einer Unterseite (2U) oder an ein oder mehreren Seitenflächen (2S) Bodenfixiermittel (24) zur sicheren reversiblen Verankerung des Energiespeichermoduls (1) am Boden (B).

3. Das Energiespeichermodul (1) nach einem der vorstehenden Ansprüche,
**dadurch gekennzeichnet,**
**dass** die Schwungspeichereinheiten (31) am Rahmen (33) des Schwungradmoduls (3) montiert sind, so dass die mechanische Energie einer einzelnen Schwungradspeichereinheit (31) im Falle eines außerplanmäßigen Versagens durch im Rahmen (33) befindliche Strukturbauteile in Verankerungen (24) abgeleitet werden kann, so dass benachbarte Schwungradspeichereinheiten (31) im Betrieb nicht beeinflusst werden und das Energiespeichermodul (1) durch den Boden (B) gesichert ist.

4. Das Energiespeichermodul (1) nach einem der vorstehenden Ansprüche,
**dadurch gekennzeichnet,**
**dass** der elektrische Zwischenkreis (32) als ein gemeinsamer Gleichstrombus (32), der mit einem Stromrichter (34) oder Durchflusswandler (34) verbunden ist, ausgestaltet ist.

5. Das Energiespeichermodul (1) nach einem der vorstehenden Ansprüche,
**dadurch gekennzeichnet,**
**dass** das Vakuummodul (4) eine gemeinsame Vakuumpumpstufe (41) zur Erzeugung eines Betriebsvakuums und ein Rohrsystem (42) umfasst, an das die Schwungradspeichereinheiten (31) angeschlossen sind.

6. Das Energiespeichermodul (1) nach einem der vorstehenden Ansprüche,
**dadurch gekennzeichnet,**
**dass** das Energiespeichermodul (1) des Weiteren ein Heiz- und/oder Kühlmodul (5) zur Entfernung zumindest interner thermischer Lasten oder zur Klimatisierung beim Betrieb des Schwungradmoduls (3) umfasst.

7. Eine Energiespeicheranlage (10) mit mehreren Energiespeichermodulen (1, 1") nach Anspruch 1, wobei die Energiespeicher module (1', 1") zumindest über die Datenschnittstellen (22a, 22b, 22c) mittels eines gemeinsamen Datennetzes (8) miteinander verbunden sind und die jeweiligen Modulsteuersysteme (6) zur gemeinsamen Steuerung (GS) der Energiespeicheranlage (10) zur Bereitstellung einer gemeinsamen Anlagenspeicherkapazität (ASK) und Anlagenleistung (AL) aus der Summe aller Modulspeicherkapazitäten (MSK) und Modulleistungen (ML) in den an die Energiespeicheranlage (10) angeschlossenen Stromnetzen (LS, NS) ausgestaltet sind.

8. Die Energiespeicheranlage (10) nach Anspruch 7,
**dadurch gekennzeichnet,**
**dass** die Netzanschlussschnittstellen (21 a, 21 b, 21 c) aller Energiespeichermodule (1, 1', 1 ") in einem gemeinsamen Aufschaltpunkt (9) zum Anschluss an ein nicht lokales Stromnetz (5) und mindestens ein lokales Stromnetz (LS) verbunden sind.

9. Die Energiespeicheranlage (10) nach Anspruch 8,
**dadurch gekennzeichnet,**
**dass** zwischen dem Aufschaltpunkt (9) und den angeschlossenen Stromnetzen (LS, NS) eine Regeleinheit (7) angeordnet ist, die dazu ausgestaltet ist, einen Energiefluss (EF) zwischen den zwei oder mehr angeschlossenen Stromnetzen (LS, NS) und der Energiespeicheranlage (10) in einer von dem Modulsteuersystem (6) vorgegebenen Weise zu regeln oder zu steuern.

10. Die Energiespeicheranlage (10) nach Anspruch 9,
**dadurch gekennzeichnet,**
**dass** die Regeleinheit (7) eine Regelbox (71) mit einem Regelglied (71-1) und separate Trennschalter für jedes der angeschlossenen Stromnetze (LS, NS) umfasst, wobei die Modulsteuereinheit (6) über eine Datenleitung (61) mit dem Regelglied (71-1) zur Übermittlung entsprechender Konfigurationsdaten einer Reglerfunktion (KD) zur Steuerung des Regelglieds (71-1) verbunden ist.

11. Die Energiespeicheranlage (10) nach Anspruch 10,
**dadurch gekennzeichnet,**
**dass** die Regelbox (71) dafür ausgestaltet ist, simultan auch einen Energiefluss aus einem der angeschlossenen Stromnetze (LS, NS) und einen Energiefluss in das andere angeschlossene Stromnetz (LS, NS) zu steuern.

12. Die Energiespeicheranlage (10) nach einem der Ansprüche 7 bis 11,
**dadurch gekennzeichnet,**
**dass** eines der Modulsteuersysteme (6) als Mastersteuersystem (6M) und die anderen Modulsteuersysteme (6) als Slave-Steuersysteme (6S) vorgesehen sind, wobei das Mastersteuersystem (6M) dazu vorgesehen ist, den Slave-Steuersystemen (6S) Anweisungen über das Datennetz (8) zur Steuerung der Schwungradspeichereinheiten (31) zur gemeinsamen Ausführung der auszuführenden Regel- und Systemaufgaben (ORS, NORS) in den angeschlossenen Stromnetzen (LS, NS) zu übermitteln.

13. Verfahren zum modularen Aufbau und Bereitstellen von Energiespeicherkapazität und Leistung für Regel- und Systemaufgaben (ORS, NORS) in Stromnetzen durch eine Energiespeicheranlange (10) nach Anspruch 7 mit ein oder mehreren Energiespeichermodulen (1) nach Anspruch 1 mit jeweils einem in einem Modulgehäuse (2) des jeweiligen Energiespeichermoduls (1) angeordneten Schwungradmodul (3) mit einem gemeinsamen Rahmen (33) in Form eines offenen Quaders mit mehreren Rahmenteilen, der gleichzeitig die Lager der Schwungradspeichereinheiten trägt und auf dem eine Vielzahl an Schwungradspeichereinheiten (31) montiert sind , umfassend die Schritte:
- Bestimmen (BS) der benötigten Anlagenspeicherkapazität (ASK) und Anlagenleistung (AL) für die Ausführung (AO, ANO) der gewünschten Regel- und Systemaufgaben (ORS, NORS) in dem oder den betreffenden anzuschließenden Stromnetzen (LS, NS);
- Vormontieren der Schwungradspeichereinheiten (31) in dem Rahmen (33) außerhalb des Modulgehäuses (2);
- Einsetzen des Schwungmoduls (3) mit Rahmen (33) nach der Vormontage als Ganzes in das Modulgehäuse (2);
- Aufstellen (AF) einer Anzahl an Energiespeichermodule (1, 1', 1") nach Anspruch 1 mit jeweiligen Modulspeicherkapazitäten (MSK), Modulleistungen (ML) und Modulsteuersystemen (6) an einem Aufstellort, wobei die Anzahl der Energiespeichermodule (1, 1', 1") so gewählt ist, dass die Summe aller Modulspeicherkapazitäten (MSK) und Modulleistungen (ML) der benötigten Anlagenspeicherkapazität (ASK) und Anlagenleistung (AL) entspricht;
- Verankern (VA) der Modulgehäuse (2) der Energiespeichermodule (1, 1', 1") am Boden (B) des Aufstellorts; und
- Anschließen (ASM) der Energiespeichermodule (1, 1', 1") in einem gemeinsamen Aufschaltpunkt (9), Anschließen (ASS) des Aufschaltpunktes (9) an die betreffenden Stromnetze (LS, NS) und Verbinden (VB) der Energiespeichermodule (1, 1', 1") mittels eines gemeinsamen Datennetzes (8) miteinander zu einer gemeinsamen Energiespeicheranlage (10) und gemeinsames Steuern (GS) der Energiespeicheranlage über die jeweiligen Modulsteuersysteme (6).

14. Das Verfahren nach Anspruch 13 umfassend die weiteren Schritte des Anpassens (AP) der Energiespeicheranlage (10) an einen geänderten Bedarf an Anlagenspeicherkapazität (ASK) und Anlagenleistung (AL) durch das Hinzufügen (H) weiterer Energiespeichermodule (1"') nach Anspruch 1 gemäß der vorstehenden Verfahrensschritte oder durch das Entfernen (E) eines oder mehrerer Energiespeichermodule (1") aus der Energiespeicheranlage (10), nachdem für das jeweils zu entfernenden Energiespeichermodul (1") alle Netzanschlüsse (21 a, 21 b, 21 c) vom Aufschaltpunkt (9), alle Datenschnittstellen (22a, 22b, 22c) von Datennetz (8) entfernt und das Modulgehäuse (2) vom Aufstellorte gelöst wurde.

15. Das Verfahren nach Anspruch 13 oder 14 umfassend die weiteren Schritte des Austauschens von schadhaften Schwungradspeichereinheiten (31), indem der Rahmen (33) zum Austausch aus dem Modulgehäuse (2) entfernt wird und nach dem erfolgten Austausch der schadhaften Schwungradspeichereinheit (31) wieder in das Modulgehäuse (2) eingesetzt wird.

## Claims

1. A mobile energy storage module (1) for providing an energy storage capacity and power for control and system tasks in power networks (LS, NS), comprising a surrounding module housing (2) for securing the content of the module housing against external influences during a transport or operation, wherein the module housing comprises at least one network connection interface (21 a, 21 b, 21 c), at least one data interface (22a, 22b, 22c) for receiving (EM) external data (ED) as control commands and for transmitting operating data (BD) to the outside, a flywheel module (3) comprising a plurality of flywheel storage units (31), which are connected to the at least one network connection interface (21 a, 21 b, 21 c) via an electric intermediate circuit (32) for providing a common module storage capacity (MSK) and module power (ML), a vacuum module (4) for generating a minimum vacuum, which is required for the operation of the flywheel module (3), in the respective flywheel storage units (31), and a module control system (6) for a suitable control of the modules (3, 4, 5, ...) in the module housing (2) comprising the flywheel module (3) and the vacuum module (4), **characterized in that** the flywheel module (3) comprises a common frame (33) in the form of an open cuboid comprising a plurality of frame parts, which simultaneously supports the bearings of the flywheel storage units, so that the frame provides for a preassembly of the flywheel storage units (31) in the frame (33) outside of the module housing (2) and for an insertion of the flywheel module with frame (33) as a whole into the module housing (2) after the preassembly and which frame is embodied such that the flywheel module (3) can also be removed again as a whole.

2. The energy storage module (1) according to claim 1, **characterized in that** the module housing (2) is designed so as to wind-tight and water-tight at least on all sides and has an insulating layer (23) on all sides, which is suitable to maintain a controlled indoor climate in the module housing (2), wherein the insulting layer (23) is arranged internally on or in the module housing (2), the module housing (2) preferably comprises bottom fixing means (24) on a bottom side (2U) or on one or a plurality of side surfaces (2S) for a secure reversible anchoring of the energy storage module (1) on the bottom (B).

3. The energy storage module (1) according to any one of the preceding claims, **characterized in that** the flywheel storage units (31) are assembled on the frame (33) of the flywheel module (3) so that the mechanical energy of an individual flywheel storage unit (31) can be diverted into anchorings (24) by means of structure components located in the frame (33) in the event of an unscheduled failure, so that adjacent flywheel storage units (31) are not influenced during operation and so that the energy storage module (1) is secured by the bottom (B).

4. The energy storage module (1) according to any one of the preceding claims, **characterized in that** the electric intermediate circuit (32) is designed as a common direct current bus (32), which is connected to a converter (34) or forward converter (34).

5. The energy storage module (1) according to any one of the preceding claims, **characterized in that** the vacuum module (4) comprises a common vacuum pump stage (41) for generating an operating vacuum and a pipe system (42), to which the flywheel storage units (31) are connected.

6. The energy storage module (1) according to any one of the preceding claims, **characterized in that** the energy storage module (1) furthermore comprises a heating and/or cooling module (5) for removing at least internal thermal loads or for climate control during operation of the flywheel module (3).

7. An energy storage system (10) comprising a plurality of energy storage modules (1, 1', 1") according to claim 1, wherein the energy storage modules (1, 1', 1") are connected to one another at least via the data interfaces (22a, 22b, 22c) by means of a common data network (8), and the respective module control systems (6) are designed to jointly control (GS) the energy storage system (10) so as to provide a common system storage capacity (ASK) and system power (AL) from the sum of all module storage capacities (MSK) and module powers (ML) in the power networks (LS, NS), which are connected to the energy storage system (10).

8. The energy storage system (10) according to claim 7, **characterized in that** the network connection interfaces (21 a, 21 b, 21 c) of all of the energy storage modules (1, 1', 1") are connected in a common connection point (9) for connection to a non-local network (5) and at least one local network (LS).

9. The energy storage system (10) according to claim 8, **characterized in that** a control unit (7) is arranged between the connection point (9) and the connected power networks (LS, NS) and is designed to regulate or to control an energy flow (EF) between the two or more connected power networks (LS, NS) and the energy storage system (10) in a manner, which is provided by the module control system (6).

10. The energy storage system (10) according to claim 9, **characterized in that** the control unit (7) comprises a control box (71) comprising a control element (71-1) and separate disconnectors for each of the connected power networks (LS, NS), wherein the module control unit (6) is connected to the control element (71-1) via a data line (61) for transmitting corresponding configuration data of a control function (KD) for controlling the control element (71-1).

11. The energy storage system (10) according to claim 10, **characterized in that** the control box (71) is designed to simultaneously also control an energy flow from one of the connected power networks (LS, NS) and an energy flow into the other connected power network (LS, NS).

12. The energy storage system (10) according to any one of claims 7 to 11, **characterized in that** one of the module control systems (6) is provided as master control system (6M) and the other module control systems (6) are provided as slave control systems (6S), wherein the master control system (6M) is provided to transmit information via the data network (8) for controlling the flywheel storage units (31) for jointly performing the control and system tasks (ORS, NORS), which are to be performed, in the connected power networks (LS, NS).

13. A method for the modular setup and provision of energy storage capacity and power for control and system tasks (ORS, NORS) in power networks through an energy storage system (10) according to claim 7, comprising one or a plurality of energy storage modules (1) according to claim 1, in each case comprising one flywheel module (3) arranged in a module housing (2) of the respective energy storage module (1), comprising a common frame (33) in the form of an open cuboid comprising a plurality of frame parts, which simultaneously supports the bearings of the flywheel storage units and a plurality of flywheel storage units (31) is assembled thereon, comprising the steps:
- determining (BS) the required system storage capacity (ASK) and system power (AL) for performing (AO, ANO) the desired control and system tasks (ORS, NORS) in the respective power network or power networks (LS, NS), which are to be connected;
- preassembling the flywheel storage units (31) in the frame (33) outside of the module housing (2);
- inserting the flywheel module (3) with frame (33) as a whole into the module housing (2) after the preassembly;
- setting up (AF) a number of energy storage modules (1, 1', 1") according to claim 1, comprising respective module storage capacities (MSK), module powers (ML) and module control systems (6) at an installation location, wherein the number of the energy storage modules (1, 1', 1") is chosen such that the sum of all module storage capacities (MSK) and module powers (ML) corresponds to the required system storage capacity (ASK) and system power (AL);
- anchoring (VA) the module housing (2) of the energy storage modules (1, 1', 1 ") on the bottom (B) of the installation location; and
- connecting (ASM) the energy storage modules (1, 1', 1") in a common connecting point (9), connecting (ASS) the connecting point (9) to the respective power networks (LS, NS), and connecting (VB) the energy storage modules (1, 1', 1") to one another by means of a common data network (8) to a common energy storage system (10) and jointly controlling (GS) the energy storage system via the respective module control systems (6).

14. The method according to claim 13, comprising the further steps of adapting (AP) the energy storage system (10) to a changed demand of system storage capacity (ASK) and system power (AL) by adding (H) further energy storage modules (1'") according to claim 1 according to the preceding method steps or by removing (E) one or a plurality of energy storage modules (1") from the energy storage system (10), after all network connections (21 a, 21 b, 21 c) for the respective energy storage module (1") to be removed have been disconnected from the connecting point (9), all data interfaces (22a, 22b, 22c) have been disconnected from the data network (8), and the module housing (2) has been disconnected from installation locations.

15. The method according to claim 13 or 14, comprising the further steps of exchanging damaged flywheel storage units (31), in that the frame (33) is removed from the module housing (2) for the exchange, and is inserted into the module housing (2) again after the exchange of the damaged flywheel storage unit (31) has taken place.

## Revendications

1. Module de stockage d'énergie mobile (1) pour fournir une capacité de stockage d'énergie et une puissance pour des tâches régulatrices et systémiques dans des réseaux électriques (LS, NS) comportant un boîtier de module (2) formant enceinte afin de protéger le contenu du boîtier de module contre les actions extérieures pendant un transport ou un fonctionnement, le boîtier de module comprenant au moins une interface de raccordement réseau (21 a, 21 b, 21 c), au moins une interface de données (22a, 22b, 22c) pour la réception (EM) de données externes (ED) en tant qu'ordres de commande et pour l'émission de données de fonctionnement (BD) vers l'extérieur, un module à volant (3) comportant une pluralité d'unités de mémoire à volant (31) qui sont reliées à l'au moins une interface de raccordement réseau (21 a, 21 b, 21 c) via un circuit électrique intermédiaire (32) pour la fourniture d'une capacité de stockage de module (MSK) et d'une puissance de module communes (ML), un module sous vide (4) pour créer un vide minimum requis pour le fonctionnement du module à volant (3) dans les unités de mémoire à volant respectives (31) et un système de commande de module (6) pour une commande appropriée des modules (3, 4, 5, ...) dans le boîtier de module (2) comprenant le module à volant (3) et le module sous vide (4), **caractérisé en ce que** le module à volant (3) comprend un châssis commun (33) en forme de parallélépipède ouvert comportant plusieurs parties de châssis, qui porte en même temps les paliers des unités de stockage à volant, de sorte que le châssis permet un prémontage des unités de stockage à volant (31) dans le châssis (33) en dehors du boîtier de module (2) et une insertion du module à volant avec châssis (33) dans son ensemble dans le boîtier de module (2) après le prémontage, et qui est conçu de telle sorte que le module à volant (3) dans son ensemble peut également être retiré.

2. Module de stockage d'énergie (1) selon la revendication 1, **caractérisé en ce que** le boîtier de module (2) est réalisé au moins de tous les côtés de manière étanche au vent et à l'eau et possède de tous les côtés une couche isolante (23) qui est adaptée pour maintenir un climat ambiant contrôlé dans le boîtier de module (2), la couche isolante (23) étant agencée intérieurement sur ou dans le boîtier de module (2), le boîtier de module (2) comprenant préférentiellement, sur une face inférieure (2U) ou sur une ou plusieurs faces latérales (2S), des moyens (24) de fixation à la base pour l'ancrage sûr et réversible du module de stockage d'énergie (1) à la base (B).

3. Module de stockage d'énergie (1) selon l'une des revendications précédentes, **caractérisé en ce que** les unités de stockage à volant (31) sont montées sur le châssis (33) du module à volant (3), de sorte que l'énergie mécanique d'une unité de stockage à volant individuelle (31) peut, en cas de défaillance exceptionnelle, être dérivée vers des ancrages (24) par des composants structurels situés dans le châssis (33), de sorte que des unités de stockage à volant voisines (31) en service ne sont pas influencées et que le module de stockage d'énergie (1) est protégé par la base (B).

4. Module de stockage d'énergie (1) selon l'une des revendications précédentes, **caractérisé en ce que** le circuit électrique intermédiaire (32) se présente sous la forme d'un bus commun de courant continu (32) qui est relié à un convertisseur (34) ou à un convertisseur à transfert direct (34).

5. Module de stockage d'énergie (1) selon l'une des revendications précédentes, **caractérisé en ce que** le module à vide (4) comprend un étage de pompe à vide commun (41) pour générer un vide de fonctionnement et un système tubulaire (42) auquel sont raccordées les unités de stockage à volant (31).

6. Module de stockage d'énergie (1) selon l'une des revendications précédentes, **caractérisé en ce que** le module de stockage d'énergie (1) comprend en outre un module de chauffage et/ou de refroidissement (5) pour enlever au moins des charges thermiques internes ou à des fins de climatisation pendant le service du module à volant (3).

7. Installation de stockage d'énergie (10) comportant plusieurs modules de stockage d'énergie (1, 1', 1") selon la revendication 1, les modules de stockage d'énergie (1', 1") étant reliés entre eux au moins via les interfaces de données (22a, 22b, 22c) au moyen d'un réseau de données commun (8) et les systèmes de commande de module respectifs (6) destinés à la commande commune (GS) de l'installation de stockage d'énergie (10) étant conçus pour fournir une capacité de stockage de l'installation (ASK) et une puissance de l'installation (AL) communes à partir de la somme de toutes les capacités de stockage de module (MSK) et puissances de module (ML) dans les réseaux électriques (LS, NS) raccordés à l'installation de stockage d'énergie (10).

8. Installation de stockage d'énergie (10) selon la revendication 7, **caractérisée en ce que** les interfaces de raccordement réseau (21 a, 21b, 21c) de tous les modules de stockage d'énergie (1, 1', 1") sont reliées en un point de branchement commun (9) destiné au raccordement à un réseau électrique non local (5) et à au moins un réseau électrique local (LS).

9. Installation de stockage d'énergie (10) selon la revendication 8, **caractérisée en ce qu'**est agencée, entre le point de branchement (9) et les réseaux électriques raccordés (LS, NS), une unité de réglage (7) qui est conçue pour régler ou commander un flux d'énergie (EF) entre les deux ou plusieurs réseaux électriques raccordés (LS, NS) et l'installation de stockage d'énergie (10) d'une manière prédéfinie par le système de commande de module (6).

10. Installation de stockage d'énergie (10) selon la revendication 9, **caractérisée en ce que** l'unité de réglage (7) comprend une boîte de réglage (71) avec un organe de réglage (71-1) et des disjoncteurs séparés pour chacun des réseau électriques raccordés (LS, NS), l'unité de commande de module (6) étant reliée via une ligne de données (61) à l'organe de réglage (71-1) pour la transmission de données de configuration correspondantes d'une fonction de régulateur (KD) pour la commande de l'organe de réglage (71-1).

11. Installation de stockage d'énergie (10) selon la revendication 10, **caractérisée en ce que** la boîte de réglage (71) est conçue pour aussi commander simultanément un flux d'énergie issu de l'un des réseaux électriques raccordés (LS, NS) et un flux d'énergie entrant dans l'autre réseau électrique raccordé (LS, NS).

12. Installation de stockage d'énergie (10) selon l'une des revendications 7 à 11, **caractérisée en ce que** l'un des systèmes de commande de module (6) est prévu en tant que système de commande maître (6M) et les autres systèmes de commande de module (6), en tant que systèmes de commande esclaves (6S), le système de commande maître (6M) étant prévu pour transmettre aux systèmes de commande esclaves (6S) des instructions via le réseau de données (8) pour commander les unités de stockage à volant (31) aux fins de l'exécution conjointe des tâches régulatrices et systémiques à exécuter (ORS, NORS) dans les réseaux électriques raccordés (LS, NS).

13. Procédé de construction modulaire et de fourniture de capacité de stockage d'énergie et de puissance pour des tâches régulatrices et systémiques (ORS, NORS) dans des réseaux électriques (LS, NS) par une installation de stockage d'énergie (10) selon la revendication 7 avec un ou plusieurs modules de stockage d'énergie (1) selon la revendication 1 comportant respectivement un module à volant (3) situé dans un boîtier de module (2) du module de stockage d'énergie respectif (1) et comprenant un châssis commun (33) en forme de parallélépipède ouvert comportant plusieurs parties de châssis, qui porte en même temps les paliers des unités de stockage à volant et sur lequel sont montées une pluralité d'unités de stockage à volant (31), comprenant les étapes suivantes :
- détermination (BS) de la capacité de stockage requise de l'installation (ASK) et de la puissance requise de l'installation (AL) pour l'exécution (AO, ANO) des tâches régulatrices et systémiques souhaitées (ORS, NORS) dans le ou les réseaux électriques concernés à raccorder (LS, NS) ;
- prémontage des unités de stockage à volant (31) dans le châssis (33) en dehors du boîtier de module (2) ;
- après le prémontage, introduction du module à volant (3) avec le châssis (33) dans son ensemble dans le module de boîtier (2) ;
- mise en place (AF) d'un nombre de modules de stockage d'énergie (1, 1', 1") selon la revendication 1 avec des capacités de stockage de module (MSK) respectives, des puissances de module (ML) respectives et des systèmes de commande de module (6) respectifs à un emplacement, le nombre de modules de stockage d'énergie (1, 1', 1 ") étant choisi de telle sorte que la somme de toutes les capacités de stockage de module (MSK) et puissances de module (ML) correspond à la capacité de stockage requise de l'installation (ASK) et à la puissance requise de l'installation (AL) ;
- ancrage (VA) des boîtiers de module (2) des modules de stockage d'énergie (1, 1', 1") à la base (B) de l'emplacement et
- raccordement (ASM) des modules de stockage d'énergie (1, 1', 1") en un point de branchement commun (9), raccordement 8ASS) du point de branchement (9) aux réseaux électriques concernés (LS, NS) et interconnexion (VB) des modules de stockage d'énergie (1, 1', 1") au moyen d'un réseau de données commun (8) pour constituer une installation de stockage d'énergie commune (10) et commande conjointe (GS) de l'installation de stockage d'énergie via les systèmes respectifs de commande de module (6).

14. Procédé selon la revendication 13, comprenant les étapes supplémentaires d'adaptation (AP) de l'installation de stockage d'énergie (10) à un besoin modifié en capacité de stockage de l'installation (ASK) et en puissance de l'installation (AL) par l'ajout (H) de modules de stockage d'énergie supplémentaires (1'") selon la revendication 1 conformément aux étapes de procédé précédentes ou par le retrait (E) d'un ou de plusieurs modules de stockage d'énergie (1") de l'installation de stockage d'énergie (10) après que, pour chaque module de stockage d'énergie (1") à retirer, tous les raccordements réseau (21 a, 21 b, 21 c) ont été retirés du point de branchement (9), toutes les interfaces de données (22a, 22b, 22c), du réseau de données (8), et que le boîtier de module (2) a été séparé de l'emplacement.

15. Procédé selon la revendication 13 ou 14, comprenant les étapes supplémentaires du remplacement d'unités de stockage à volant défectueuses (31) par retrait du châssis (33) du boîtier de module (2) pour remplacement et par sa réinsertion dans le boîtier de module (2), une fois effectué le remplacement de l'unité de stockage à volant défectueuse (31).
